# EUROPÄISCHE PATENTSCHRIFT

(11) **EP 3 704 387 B1**
(45) Veröffentlichungstag und Bekanntmachung des Hinweises auf die Patenterteilung: **08.05.2024**
(21) Anmeldenummer: 18795329.4
(22) Anmeldetag: 18.10.2018
(51) Int. Cl.: F16B 5/06, H02B 1/052, H02B 1/32, F16B 13/06, F16B 21/08, F16B 21/09, H02B 1/048

(54) **ANORDNUNG MIT EINER TRAGSCHIENE UND DARAUF ANEINANDERGEREIHTEN GEHÄUSEN**
ASSEMBLY WITH A SUPPORT RAIL AND HOUSINGS MOUNTED SIDE BY SIDE THEREON
AGENCEMENT COMPRENANT UN RAIL SUPPORT ET DES BOÎTIERS MONTÉS CÔTE À CÔTE SUR LE RAIL

(30) Priorität: 03.11.2017 DE 202017106653 U
(43) Veröffentlichungstag der Anmeldung: 09.09.2020
(73) Patentinhaber: Weidmüller Interface GmbH & Co. KG, 32758 Detmold (DE)
(72) Erfinder: AVENHAUS, Eike, 32545 Bad Oeynhausen (DE); GIESBRECHT, Peter, 32756 Detmold (DE); DIEKMANN, Jörg, 33813 Oerlinghausen (DE); MEYER, Peter, 32107 Bad Salzuflen (DE); NEUMANN, Genadij, 32758 Detmold (DE); REMKE, Andre, 48369 Saerbeck (DE)
(74) Vertreter: Specht, Peter
(86) Internationale Anmeldenummer: PCT/EP2018/078534
(87) Internationale Veröffentlichungsnummer: WO 2019/086260

(56) Entgegenhaltungen:
- EP-A1- 0 017 124
- EP-A1- 1 376 793
- DE-A1- 19 859 716
- DE-A1-102012 102 170
- FR-A1- 2 719 184
- GB-A- 2 219 622
- GB-A- 2 234 546
- US-A- 3 702 137
- US-A1- 2002 192 047
- US-A1- 2017 197 668
- US-B1- 6 378 825

## Beschreibung

Die Erfindung betrifft eine Anordnung nach dem Oberbegeriff des Anspruchs 1.

Zum technologischen Hintergrund werden die DE 10 2012 102 170 A2 und die EP 0 017 124 A1 genannt. In der DE 10 2012 102 170 A2 sind eine Montageeinheit und ein Verfahren bereitgestellt zur Montage einer Montageschiene an einer Montageplatte für einen Schaltschrank. Die Montageeinheit dient zur Montage der Montageschiene (für elektrische Geräte an der Montageplatte für den Schaltschrank und hat ein Kopplungselement m Koppeln der Montageeinheit (20) mittels Formschluss mit der Montageschiene. Die EP 0 017 124 A1 erklärt, dass sich bei einem elektrischen Gerät, insbesondere Installationsgerät, wie Signalleuchte, Schaltgerät, Transformator o. dgl., zum wahlweisen Einbau in ein Gerätegehäuse, einen Schaltschrank oder an eine Montageplatte, ergeben sich erhebliche Schwierigkeiten beim Verbinden von mehreren Bauelementen, aus welchen jedes Gerät zusammengesetzt ist. Um die einzelnen Bauelemente zusammenzusetzen und wieder voneinander trennen zu können und Zusammenhalt der Bauelemente jedes Gerätes untereinander zu gewährleisten, werden die Bauelemente sowohl untereinander als auch mit dem Gerätegehäuse oder dem Schaltschrank durch seitliche, von außen sichtbare und betätigbare federnd elastische, in Raststellen eingreifende Bauteile lösbar verbunden, wobei die federnd elastischen Bauteile aus zwei einander gegenüberliegenden, im wesentlichen ebenflächigen Stegen bestehen, die von außen über Raststellen des zu verbindenden Bauteils greifen.

Im Schaltschrankbau besteht die Notwendigkeit, Gehäuse von elektrischen Kontakt- und Funktionselementen (d.h. Gehäuse, die mit elektrischen Kontakt- und/oder Funktionselementen versehbar sind oder bereits versehen sind), auf Tragschienen in einer vorher definierten Menge und Reihenfolge aneinanderzureihen und - beispielsweise rastend - auf der Tragschiene zu fixieren. Die Tragschiene kann beispielsweise eine hutartige Querschnittsgeometrie aufweisen, sie kann aber auch einen anderen, beispielsweise einen C-förmigen Querschnitt, aufweisen. Das Aneinanderreihen bzw. Bestücken und das anschließende Fixieren jedes einzelnen Gehäuses der Kontakt- und Funktionselemente erfolgen üblicherweise auf einer bereits in den Schaltschrank eingesetzten und dort z.B. an einer Montagebasis fixierten Tragschiene. Diese Art der Montage ist relativ arbeitsaufwendig und mühsam.

Eine gattungsgemäße Anordnung ist aus der US 6,378,825 B1 bekannt.

Die Erfindung hat ausgehend von der US 6,378,825 B1 die Aufgabe, die Montage nochmals zu vereinfachen.

Die Erfindung löst diese Aufgabe durch den Gegenstand des Anspruchs 1. Geschaffen wird eine Anordnung mit einer Tragschiene und einer Montagebasis, wobei auf der Tragschiene eine Mehrzahl von aneinanderreihbaren Gehäusen, die mit elektrischen Kontakt- und/oder Funktionselementen versehen sind, anordenbar sind wobei die Tragschiene auf die Montagebasis auch in einem Zustand montierbar ist, wenn die Gehäuse vor der Montage der Tragschiene bereits auf die Tragschiene aufgereiht worden sind, wobei die Tragschiene durch zwei oder mehr Montagebolzen, die vor der

Montage der Tragschiene an die Montagebasis angesetzt sind, an der Montagebasis befestigt ist, wobei die Montagebolzen und die Tragschiene korrespondierend derart ausgestaltet sind, dass die Tragschiene werkzeuglos auf die Montagebolzen aufsetzbar und an diesen arretierbar ist, wobei die Tragschiene Durchgangsbohrungen aufweist, wobei die Montagebolzen einen Kopf sowie einen Schaft mit einem im Vergleich zum Kopf kleineren Durchmesser aufweisen, wobei der Kopf(des jeweiligen Montagebolzens eines oder mehrere Rastmittel aufweist, und wobei das Rastmittel jedes Kopfes im verrasteten Zustand mit einer jeweiligen der Durchgangsbohrungen so zusammenwirkt, dass diese im Bezug auf das Rastmittel als Gegenrastmittel nach dem Prinzip einer Ringschnappverbindung wirkt, wobei das Rastmittel segmentartige Ausnehmungen aufweist, so dass es in mehrere Rastsegmente unterteilt ist.

Derart kann auf die Tragschiene bereits vor ihrer Montage über einen Teil ihrer Länge oder sogar über ihre gesamte Länge eine Mehrzahl der Anreihgehäuse aufgesetzt werden. Sodann wird die mit den Anreihgehäusen bestückte Tragschiene als vormontierte Einheit auf die Montagebolzen aufgesetzt und an diesen arretiert. Weitere vorteilhafte Ausgestaltungen des erfindungsgemäßen Gegenstands sind den Unteransprüchen zu entnehmen.

Nachfolgend wird die Erfindung anhand von Ausführungsbeispielen unter Bezug auf die Zeichnung näher beschrieben, wobei auch weitere vorteilhafte Varianten und Ausgestaltungen diskutiert werden. Es sei betont, dass das nachfolgend diskutierte Ausführungsbeispiel die Erfindung nicht abschließend beschreiben soll, sondern dass auch nicht dargestellte Varianten und Äquivalente realisierbar sind und unter die Ansprüche fallen. Es zeigt:
- Figur 1:: eine Draufsicht von aneinandergereihten elektrischen Kontakt- und Funktionselementen auf einer Tragschiene, die auf eine Montagebasis eines Schaltschrankes montiert ist;
- Figur 2a:: eine räumliche Ansicht eines Ausführungsbeispiels der Tragschiene, wobei die Tragschiene vor einer werkzeuglosen Montage dargestellt ist;
- Figur 2b:: eine räumliche Ansicht des Ausführungsbeispiels der Tragschiene aus Fig. 2a, wobei die Tragschiene während der werkzeuglosen Montage dargestellt ist;
- Figur 2c:: eine räumliche Ansicht des Ausführungsbeispiels der Tragschiene aus Fig. 2a, wobei die Tragschiene nach erfolgter werkzeugloser Montage dargestellt ist;
- Figur 3a:: ein Ausschnitt einer Vorderansicht im Schnitt der Tragschiene aus Fig. 2a;
- Figur 3b:: ein Ausschnitt einer Vorderansicht im Schnitt der Tragschiene aus Fig. 2b;
- Figur 3c:: ein Ausschnitt einer Vorderansicht im Schnitt der Tragschiene aus Fig. 2c;
- Figur 4a:: eine vergrößerte Vorderansicht im Schnitt der Tragschiene aus Fig. 2c;
- Figur 4b:: eine vergrößerte Vorderansicht im Schnitt einer Ausführungsvariante der Tragschiene aus Fig. 4a;
- Figur 5a:: eine räumliche Ansicht eines Montagebolzens;
- Figur 5b:: eine weitere räumliche Ansicht des Montagebolzens aus Fig. 5a;
- Figur 5c:: eine räumliche Ansicht einer Ausführungsvariante des Montagebolzens aus Fig. 5a;
- Figur 5d:: eine weitere räumliche Ansicht des Montagebolzens aus Fig. 5c;
- Figur 6a:: eine vergrößerte Vorderansicht im Schnitt der Tragschiene aus Fig. 3c mit einer Ausführungsvariante des Montagebolzens;
- Figur 6b:: eine vergrößerte Vorderansicht im Schnitt einer Ausführungsvariante der Tragschiene aus Fig. 6a;
- Figur 7a:: eine räumliche Detailansicht des Montagebolzens aus Fig. 6a bzw. Fig. 6b, ohne die Kopfdetails aus den Fig. 5a bis Fig. 5d;
- Figur 7b:: eine weitere räumliche Detailansicht des Montagebolzens aus Fig. 7a;
- Figur 8a:: eine vergrößerte Vorderansicht im Schnitt der Tragschiene aus Fig. 3c mit einer weiteren Ausführungsvariante des Montagebolzens;
- Figur 8b:: eine vergrößerte Vorderansicht im Schnitt einer Ausführungsvariante der Tragschiene aus Fig. 8a;
- Figur 9a:: eine räumliche Ansicht des Montagebolzens aus Fig. 8a bzw. Fig. 8b ohne die Kopfdetails aus den Figuren 8a und 8b;
- Figur 9b:: eine weitere räumliche Ansicht des Montagebolzens aus Fig. 9a;
- Figur 10a:: eine vergrößerte Vorderansicht im Schnitt der Tragschiene aus Fig. 3c mit einer weiteren Ausführungsvariante des Montagebolzens;
- Figur 10b:: eine vergrößerte Vorderansicht im Schnitt einer Ausführungsvariante der Tragschiene aus Fig. 10a;
- Figur 11a:: eine räumliche Ansicht eines Montagebolzens aus Fig. 10a bzw. Fig. 10b;
- Figur 11b:: eine weitere räumliche Ansicht des Montagebolzens aus Fig. 11a;
- Figur 11c:: eine räumliche Detailansicht eines Kopfes des Montagebolzens aus Fig. 10a bzw. Fig. 10b;
- Figur 11d:: eine weitere räumliche Detailansicht des Kopfes des Montagebolzens aus Fig. 11a bzw. Fig. 11b;
- Figur 12a:: eine vergrößerte Vorderansicht im Schnitt der Tragschiene aus Fig. 3c mit einer weiteren Ausführungsvariante des Montagebolzens;
- Figur 12b:: eine vergrößerte Vorderansicht im Schnitt einer Ausführungsvariante der Tragschiene aus Fig. 12a;
- Figur 13a:: eine räumliche Ansicht eines Montagebolzens aus Fig. 12a bzw. Fig. 12b;
- Figur 13b:: eine räumliche Detailansicht eines Rastmittels des Montagebolzens aus Fig. 13a;
- Figur 13c:: eine räumliche Detailansicht des Montagebolzens aus Fig. 13a ohne das Rastmittel aus der Fig. 13b;
- Figur 14a:: eine vergrößerte Vorderansicht im Schnitt der Tragschiene aus Fig. 3c mit einer weiteren Ausführungsvariante des Montagebolzens;
- Figur 14b:: eine vergrößerte Vorderansicht im Schnitt einer Ausführungsvariante der Tragschiene aus Fig. 14a;
- Figur 15a:: eine räumliche Ansicht eines Montagebolzens aus Fig. 14a bzw. Fig. 14b;
- Figur 15b:: eine räumliche Detailansicht eines Rastmittels des Montagebolzens aus Fig. 15a;
- Figur 15c:: eine räumliche Detailansicht des Montagebolzens aus Fig. 15a ohne das Rastmittel aus der Fig. 15b;
- Figur 16a:: eine räumliche Ansicht eines weiteren Ausführungsbeispiels einer Tragschiene, wobei die Tragschiene vor einer werkzeuglosen Montage dargestellt ist;
- Figur 16b:: ein Ausschnitt einer Vorderansicht im Schnitt der Tragschiene aus Fig. 16a mit einer weiteren Ausführungsvariante eines Montagebolzens sowie einem Zusatzelement;
- Figur 16c:: eine Draufsicht von Fig. 16b;
- Figur 16d:: eine räumliche Ansicht von Fig. 16c;
- Figur 17a:: eine Vorderansicht des Ausführungsbeispiels der Tragschiene aus Fig. 16a, wobei die Tragschiene während der werkzeuglosen Montage dargestellt ist;
- Figur 17b:: ein Ausschnitt einer Vorderansicht im Schnitt der Tragschiene aus Fig. 17a;
- Figur 17c:: eine Draufsicht von Fig. 17b;
- Figur 17d:: eine räumliche Ansicht von Fig. 17c;
- Figur 18a:: eine räumliche Ansicht des Ausführungsbeispiels der Tragschiene aus Fig. 16a, wobei die Tragschiene nach erfolgter werkzeugloser Montage dargestellt ist;
- Figur 18b:: ein Ausschnitt einer Vorderansicht im Schnitt der Tragschiene aus Fig. 18a;
- Figur 18c:: eine Draufsicht von Fig. 18b;
- Figur 18d:: eine räumliche Ansicht von Fig. 18c;
- Figur 19a:: eine räumliche Ansicht einer weiteren Ausführungsvariante eines erfindungsgemäßen Montagebolzens;
- Figur 19b: eine räumliche Ansicht des Montagebolzens aus Fig. 19a;
- Figur 19c:: eine räumliche Ansicht eines Details des Montagebolzens aus Fig. 19a;
- Figur 20a:: eine räumliche Ansicht von aneinandergereihten elektrischen Kontaktund Funktionselementen auf einer Tragschiene vor der Montage mit dem Montagebolzen aus Fig.19a;
- Figur 20b:: eine Draufsicht von aneinandergereihten elektrischen Kontakt- und Funktionselementen auf der Tragschiene aus Fig. 20a vor der Montage mit dem Montagebolzen aus Fig. 19a;
- Figur 20c:: eine Seitenansicht im Schnitt von aneinandergereihten elektrischen Kontakt- und Funktionselementen auf der Tragschiene aus Fig. 20a vor der Montage mit dem Montagebolzen aus Fig. 19a;
- Figur 21a:: eine räumliche Ansicht von aneinandergereihten elektrischen Kontaktund Funktionselementen auf der Tragschiene aus Fig. 20a während der Montage mit dem Montagebolzen aus Fig.19a;
- Figur 21b:: eine Draufsicht von aneinandergereihten elektrischen Kontakt- und Funktionselementen auf der Tragschiene aus Fig. 20a während der Montage mit dem Montagebolzen aus Fig. 19a;
- Figur 21c:: eine Seitenansicht im Schnitt von aneinandergereihten elektrischen Kontakt- und Funktionselementen auf der Tragschiene aus Fig. 20a während der Montage mit dem Montagebolzen aus Fig. 19a;
- Figur 22a:: eine räumliche Ansicht von aneinandergereihten elektrischen Kontaktund Funktionselementen auf der Tragschiene aus Fig. 20a nach erfolgter Montage mit dem Montagebolzen aus Fig.19a;
- Figur 22b:: eine Draufsicht von aneinandergereihten elektrischen Kontakt- und Funktionselementen auf der Tragschiene aus Fig. 20a nach erfolgter Montage mit dem Montagebolzen aus Fig. 19a;
- Figur 22c:: eine Seitenansicht im Schnitt von aneinandergereihten elektrischen Kontakt- und Funktionselementen auf der Tragschiene aus Fig. 20a nach erfolgter Montage mit dem Montagebolzen aus Fig. 19a;

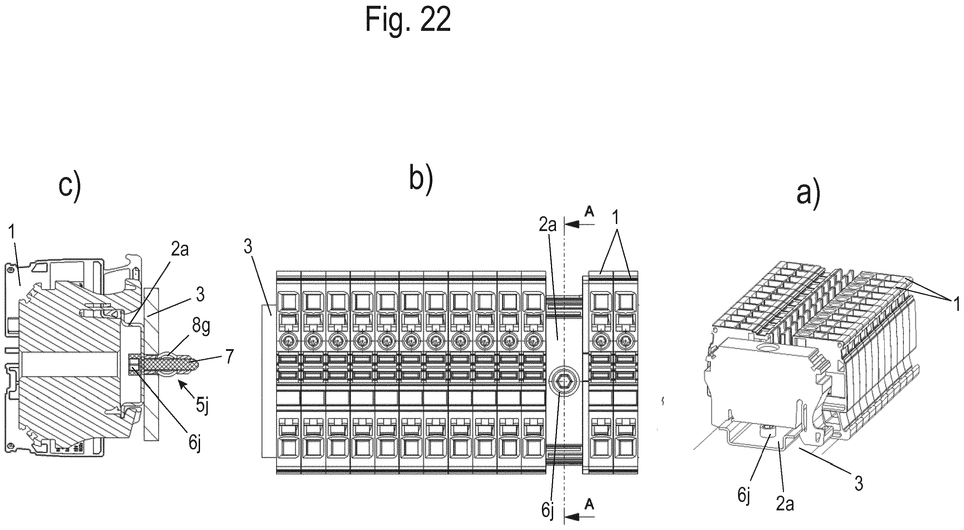

Die Fig. 5c und 5d sowie 5c und 5d und 12 bis 22 fallen nicht unter den Anspruch 1.

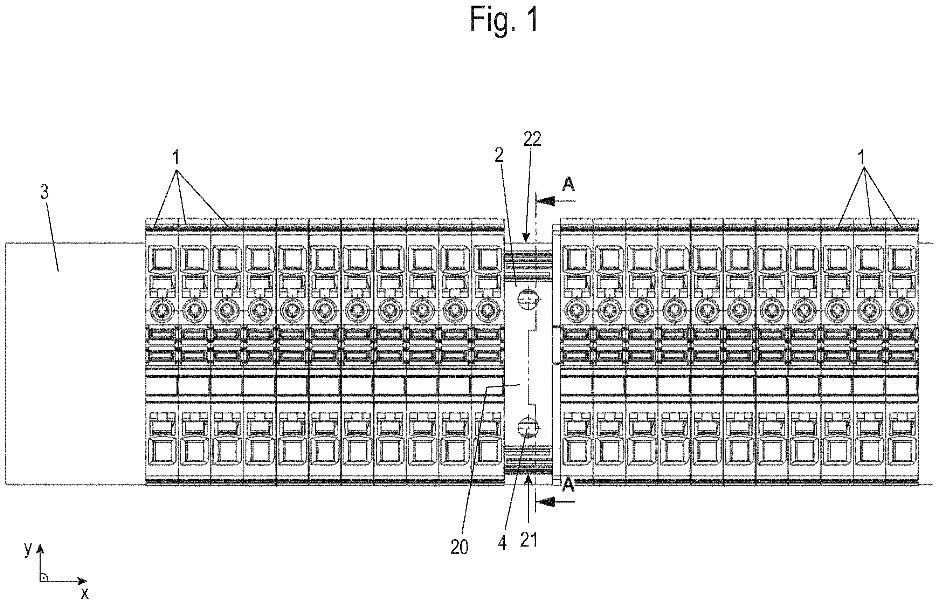

Nach Fig. 1 ist eine Mehrzahl aneinandergereihter Gehäuse mit elektrischen Kontakt- und Funktionselementen 1 auf einer Tragschiene 2 festgelegt, die auf eine Montagebasis 3 eines Schaltschrankes (hier nicht dargestellt) montiert ist. Unter dem Begriff "Gehäuse mit elektrischen Kontakt- und Funktionselementen" sind im Rahmen dieser Schrift Reihenklemmen, deren Gehäuse mit einem oder mehreren passiven (dazu gehören auch Leiter und Stromschienen) und/oder aktiven Bauelementen bestückt sind, aber auch mit Bauelementen bestückbare Elektronikgehäuse zu verstehen.

Die Tragschiene 2 kann wie hier dargestellt beispielsweise eine hutartige Querschnittsgeometrie aufweisen, sie kann aber auch einen anderen, beispielsweise einen C-förmigen Querschnitt, aufweisen.

Es ist vorzugsweise vorgesehen, dass in einem ersten Montageschritt 100 die auf der Tragschiene (nach einem Verdrahtungs-/Schaltplan unterzubringenden) - Gehäuse 1 mit Kontakt- und Funktionselementen in einer definierten Anzahl und Reihenfolge auf der Tragschiene 2 aneinandergereiht montiert werden. Dazu werden beispielsweise Rastfüße der Gehäuse 1 auf die Tragschiene aufgerastet.

In der Regel dienen Ränder 21, 22 der Tragschiene 2 - hier sind diese L-förmig gestaltet - dieser Vormontage der Gehäuse 1 und der Tragschiene zu einer vormontierten Einheit. Zwischen diesen Rändern erstreckt sich ein Grundschenkel 20. Die Haupterstreckungsrichtung der Tragschiene und dieses Grundschenkels 20 wird in den Fig. mit X bezeichnet. Das Aufrasten der Gehäuse 1 erfolgt im wesentlichen senkrecht zur Tragschiene 2 und zur Montagebasis - insbesondere einer ebenen Montageplatte - von oben in Z-Richtung. Der Grundschenkel 20 erstreckt sich flächig in der X-/Y-Ebene.

Die Tragschiene 2 weist eine Mehrzahl (vorzugsweise mindestens zwei oder mehr) an Durchgangslöchern bzw. Fenstern (nachfolgend auch Durchgangsbohrungen genannt, ohne dass dieser Begriff im Sinne eines Einbringens durch Bohren beschränkend zu verstehen ist) auf. Die Durchgangsbohrungen 4 sind vorzugsweise in dem Grundschenkel 20 ausgebildet.

Die Durchgangsbohrungen 4 können dabei in einem definierten Muster angeordnet sein. Ein besonders bevorzugtes Muster kann ein Anordnen auf einer gedachten Geraden mit gleichmäßigen Abständen zwischen jeweils zwei Durchgangsbohrungen 4 beinhalten. Dieses Muster kann optional jeweils einen von diesem Abstand verschiedenen Abstand von einem jeweils freien Ende der Tragschiene 2 zur jeweils ersten Durchgangsbohrung 4 aufweisen. Die beiden Abstände vom jeweiligen freien Ende zur jeweils ersten Durchgangsbohrung 4 sind hier gleich groß.

Die Durchgangsbohrungen 4 weisen eine definierte Kontur bzw. eine definierte Querschnittsform auf. Die Durchgangsbohrungen 4a können einen kreisförmigen Querschnitt aufweisen. Sie können aber auch als Durchgangsbohrung 4b mit einem ovalen Querschnitt -also als Langloch- und/oder als Durchgangsbohrung 4c mit einem schlüssellochartigen Querschnitt ausgeführt sein. Sie können aber auch einen mehreckigen Querschnitt aufweisen.

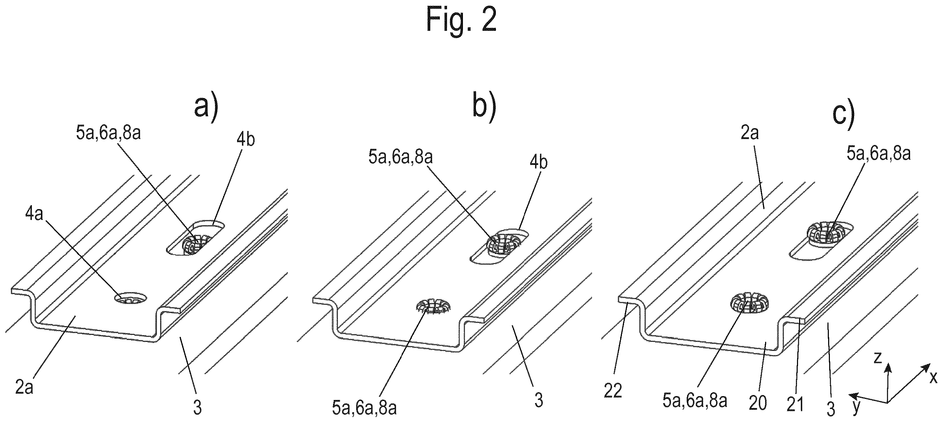

In einem folgenden Montageschritt 200 werden Montagebolzen 5 in der Grundplatte 3 festgelegt (siehe zum Verständnis z.B. Fig. 2a), beispielsweise in dafür vorgesehenen Gewindebohrungen in die Montagebasis 3 geschraubt. Die Gewindebohrungen der Montagebasis 3 korrespondieren hinsichtlich des Musters ihrer Anordnung mit dem Muster der Anordnung der Durchgangsbohrungen 4a, 4b in der Tragschiene 2.

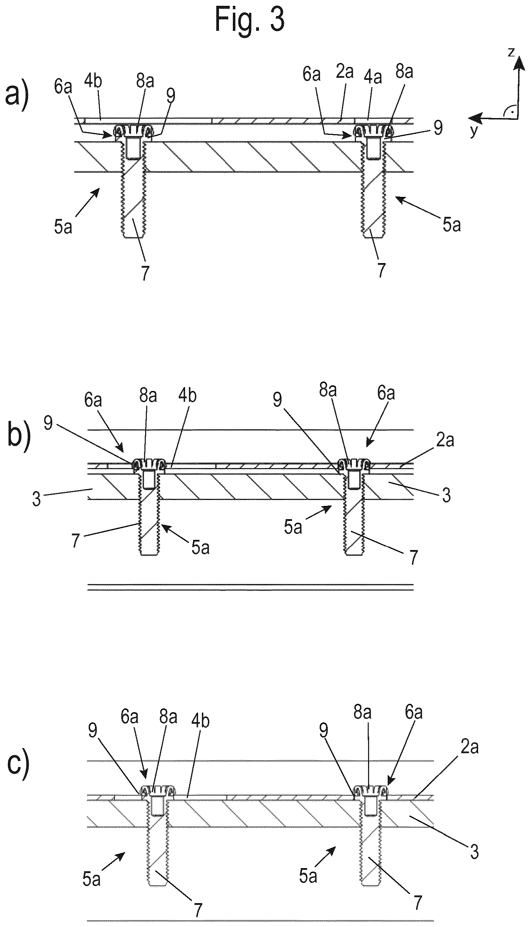

Der bevorzugte Montagebolzen 5 weist einen Kopf 6 (siehe z.B. Fig. 3a) sowie einen Schaft 7 (hier nicht dargestellt, siehe z.B. Fig. 3b) auf. Der Kopf 6 weist einen im Vergleich zum Schaft 5 größeren Durchmesser auf. Der Kopf 6 des Montagebolzens 5 weist wenigstens ein Rastmittel 8 auf. Alternativ kann er auch mehrere der Rastmittel 8 aufweisen. Insofern kann nachfolgend der gewählte Singular im Bezug auf das Merkmal des Rastmittels 8 auch durch einen Plural ersetzt werden.

Das Rastmittel 8 wirkt im verrasteten Zustand mit der Durchgangsbohrung zusammen, die im Bezug auf das Rastmittel 8 als Gegenrastmittel wirkt. Das Rastmittel 8 hintergreift im verrasteten Zustand einen Rand der Durchgangsbohrung.

In einem weiteren Montageschritt 200 kann die im ersten Montageschritt 100 mit Kontakt- und Funktionselementen 1 bestückte Tragschiene 2 an den Montagebolzen 5 arretiert werden.

In dem weiteren Montageschritt 200 kann die im ersten Montageschritt 100 mit Kontakt- und Funktionselementen 1 bestückte Tragschiene 2 beispielsweise einfach senkrecht über die jeweiligen Montagebolzen 5 auf die Montagebasis 3 geschoben werden, so dass an der jeweiligen Durchgangsbohrung 4a, 4b das jeweilige Rastmittel 8 des jeweiligen Montagebolzens 5 werkzeuglos montiert, bzw. verrastet wird. Das Rastmittel 8 kann insbesondere vorteilhaft nach dem Prinzip einer Ringschnappverbindung ausgelegt sein.

In Fig. 2a ist eine Tragschiene 2a vor der Montage mit den Montagebolzen 5a dargestellt. Das jeweilige Rastmittel 8a ist jeweils am Kopf 6a des jeweiligen Montagebolzens 5a angeordnet. Es ist vorgesehen, dass die Durchgangsbohrungen 4a, 4b und die Montagebolzen 5a korrespondierend zueinander ausgebildet sind.

In Fig. 3a ist die Tragschiene 2a aus Fig. 2a in einer Vorderansicht im Schnitt dargestellt. In Fig. 3a ist erkennbar, dass das Rastmittel 8a segmentartige, umfangsverteilte Ausnehmungen aufweist. Hierdurch ist es vorteilhaft in mehrere Raststege unterteilt, die umfangsverteilt auf dem Kopf des Montagebolzens angeordnet sind.

Durch eine geeignete Dimensionierung und geometrische Ausgestaltung der Ausnehmungen können die Federeigenschaften des Rastmittels 8a optimal eingestellt werden, so dass sich das Rastmittel 8a sowohl einfach und damit vorteilhaft mit der jeweiligen Durchgangsbohrung 4a verrasten lässt, als auch dauerhaft unter Belastung durch das Gewicht der Kontakt- und Funktionselemente 1 die Rastverbindung mit der jeweiligen Durchgangsbohrung 4a aufrecht erhält.

In Fig. 2b ist die Tragschiene 2a aus Fig. 2a während der werkzeuglosen Montage auf die Montagebasis 3 dargestellt. In Fig. 3b ist dargestellt, wie dabei das jeweilige Rastmittel 8a des jeweiligen Montagebolzens 5a an die jeweilige Durchgangsbohrung 4a, 4b angesetzt wird und dabei elastisch radial nach innen verformt wird, so dass die Tragschiene 2a in Richtung der Montagebasis 3 geschoben werden kann, bis sich das Rastmittel wieder elastisch radial nach außen entspannen und verformen kann.

In Fig. 2c ist die Tragschiene 2a aus Fig. 2a nach der werkzeuglosen Montage auf der Montagebasis 3 dargestellt.

In Fig. 3c ist dargestellt, dass der Kopf 6a mit dem jeweiligen Rastmittel 8a des jeweiligen Montagebolzens 5a die jeweilige Durchgangsbohrung 4a im verrasteten Zustand, in dem sich das Rastmittel wieder entspannt hat, pilzkappenartig bzw. nach Art eines Halbrundnietkopfes überdecken kann. Dies ist vorteilhaft, da derart die Tragschiene 2 dauerhaft fest an der Montagebasis 3 anliegt und sicher an dieser befestigt ist.

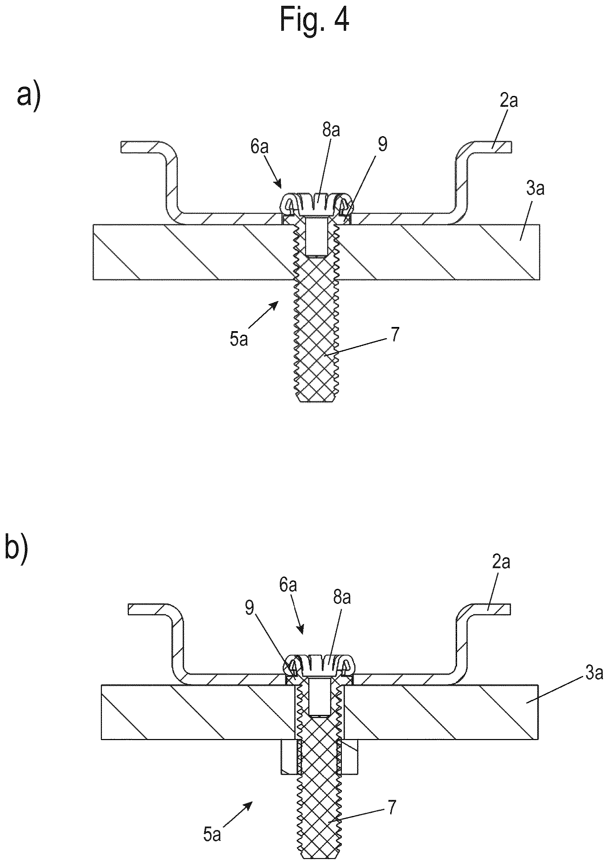

In Fig. 4a ist eine vergrößerte Vorderansicht der Tragschiene 2a aus Fig. 2c im Schnitt dargestellt. In dieser Ausführungsvariante der Montagebasis 3 weist die Montagebasis 3 wiederum in bevorzugter - aber nicht zwingender - Ausgestaltung eine zu der jeweiligen Durchgangsbohrung 4a, 4b korrespondierende Gewindebohrung auf. Der jeweilige Montagebolzen 5a durchgreift mit seinem Schaft 7, der mit einem entsprechenden Bolzengewinde versehen ist, die Gewindebohrung der Montagebasis 3.

In Fig. 4a ist erkennbar, dass die zwischen Aussparungen verbleibenden federnden Rastsegmente/Raststege/Federstege des Rastmittels 8a einen C-förmigen Querschnitt aufweisen können, wobei des jeweilige freie Ende des jeweiligen Rastsegments in radialer Richtung in Bezug auf den Montagebolzen 5a nach innen bzw. in Richtung des Montagebolzens 5a gerichtet ist. Im verrasteten Zustand des Rastmittels 8a liegt das jeweilige freie Ende des jeweiligen Rastsegmentes parallel zur Ebene der Montagebasis 3 auf der Tragschiene 2a auf.

In Fig. 4b ist eine alternative Ausführungsvariante der Montagebasis 3 dargestellt. In dieser Ausführungsvariante weist die Montagebasis eine zu der jeweiligen Durchgangsbohrung 4a, 4b korrespondierende Durchgangsbohrung auf. Der jeweilige Montagebolzen 5a durchgreift mit seinem Schaft 7 die Durchgangsbohrung der Montagebasis 3. Der Schaft 7, der mit einem entsprechenden Bolzengewinde versehen ist, durchgreift eine Gewindebohrung einer Mutter.

In Fig. 4a bzw. Fig. 4b ist dargestellt, dass der Kopf 6a des Montagebolzens 6a (und auch der des Montagebolzens 6b, hier jedoch nicht dargestellt) einen zylinderförmigen Bund 9 aufweist. Der Bund erstreckt sich axial zwischen dem Schaft und dem Rastmittel. Der Bund 9 kann die Durchgangsbohrung 4a auch axial und radial vollständig ausfüllen, so dass er satt in der Durchgangsbohrung der Tragschiene sitzen kann. Insbesondere entspricht die Höhe des Bundes (in Z-Richtung) der Dicke der Tragschiene 2a (in Z-Richtung) im Bereich der Durchgangsbohrung 4a.

Dadurch wird vorteilhaft sichergestellt, dass sich das Rastmittel 8a nicht in der Durchgangsbohrung 4a bzw. 4b verklemmen kann, so dass die Rastverbindung zwischen dem Rastmittel 8a und der Tragschiene 2a bzw. die Befestigung der Tragschiene 2a durch den Montagebolzen und der Tragschiene 2 dauerhaft sicher ist.

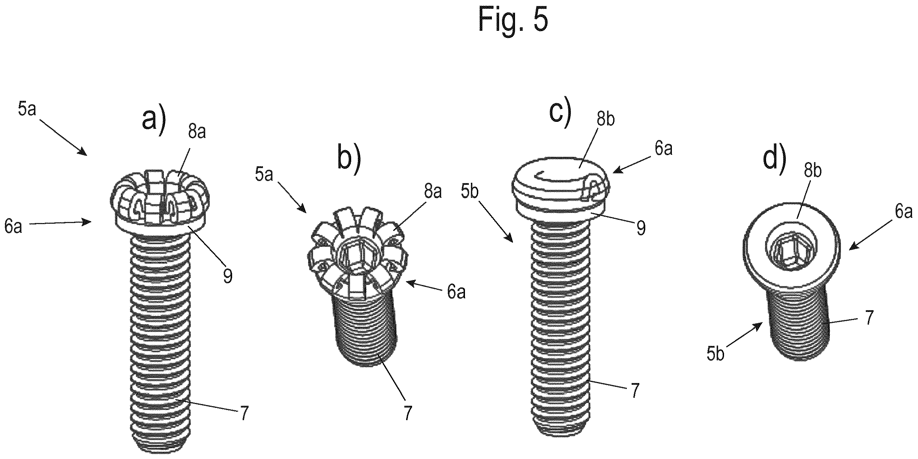

In Fig. 5a ist der Montagebolzen 5a dargestellt. Der Montagebolzen 5a weist an seinem Kopf 6a den zylinderförmigen Bund 9 auf. Auf dem Bund 9 ist das Rastmittel 8a befestigt.

Das Rastmittel 8a weist wiederum segmentartige Ausnehmungen auf.

Das Rastmittel 8a dieses Ausführungsbeispiels und auch sämtlicher Ausführungsbeispiele kann bevorzugt aus einem metallischen Werkstoff mit guten Federeigenschaften hergestellt sein. Auch die übrigen Abschnitte der Montagebolzen können aus einem metallischen Werkstoff hergestellt sein. Die Befestigung des Rastmittels 8a auf dem Kopf 6a kann durch einen Prägeprozess erfolgen oder auf andere Weise.

Der Kopf 6a des Montagebolzens 5a kann vorteilhaft eine Antriebsgeometrie - beispielswiese einen Innenmehrkant - zur Drehmomentübertragung auf den Montagebolzen 5a aufweisen. Alternativ kann die Antriebsgeometrie zur Drehmomentübertragung auch als Innenmehrrund oder auch auf noch andere Weise gestaltet sein. In Fig. 5b sind der Innenmehrkant des Montagebolzens 5a sowie die Ausnehmungen des Rastmittels 8a des Montagebolzens 5a zu erkennen.

Die Fig. 5c und 5d fallen nicht unter den Anspruch 1.

In Fig. 5c ist eine Ausführungsvariante des Montagebolzens 5a dargestellt. Um auch für eine Durchgangbohrung 4b in Form eines Langlochs eine optimale Überdeckung der Durchgangsbohrung 4b zu erreichen, so dass die Tragschiene 2a dauerhaft fest an der Montagebasis 3 anliegt, ist das Rastmittel 8b des Montagebolzens 5b -unterschiedlich zu dem Rastmittel 8a - ohne Ausnehmungen ausgeführt.

Ein Rastmittel 8 mit Ausnehmungen - wie das Rastmittel 8a- kann bei einer als Langloch ausgeführten Durchgangsbohrung 4b durch Verkanten oder nicht vollständiges Einrasten zu einer fehlerhaften oder nicht vollständigen Verrastung führen. Dies ist durch das Rastmittel 8b ohne Ausnehmungen vorteilhaft ausgeschlossen.

Das Rastmittel 8b weist deshalb eine offene Kreisringgeometrie ohne Segmente auf. Dadurch legt sich das jeweilige Rastmittel 8b des jeweiligen Montagebolzens 5b an die jeweilige Durchgangsbohrung 4b an und wird dabei elastisch in radialer Richtung verformt, so dass die Tragschiene 2a in Richtung der Montagebasis 3 geschoben werden kann.

Der Kopf 6b mit dem jeweiligen Rastmittel 8b des jeweiligen Montagebolzens 5b überdeckt nach dem vollständigen Verrasten zumindest abschnittweise pilzkappenartig bzw. nach Art eines Halbrundnietkopfes die jeweilige Durchgangsbohrung 4b, so dass die Tragschiene 2a dauerhaft fest an der Montagebasis 3 anliegt.

In Fig. 5d ist der Innenmehrkant des Montagebolzens 5b aus Fig. 5c zu erkennen.

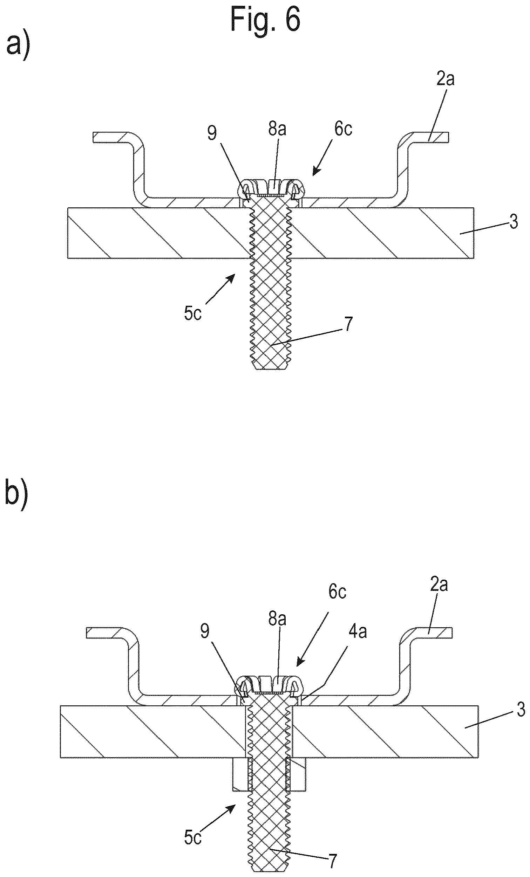

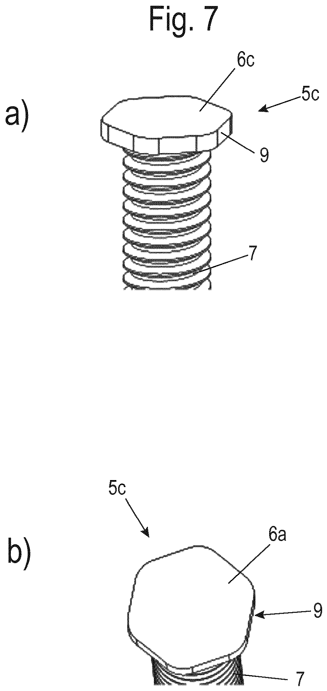

In den Figuren 6a, 6b sowie 7a und 7b ist eine weitere Ausführungsvariante des Montagebolzens 5 dargestellt. Es werden insbesondere Abweichungen und/oder Ergänzungen zu dem Montagebolzen 5a und 5b nach den Figuren 2a bis 5d beschrieben.

Der Kopf 6c des Montagebolzens 5c weist - abweichend von den Montagebolzen 5a und 5b- einen Außenmehrkant als Antriebsgeometrie zur Drehmomentübertragung auf den Montagebolzen 5c auf. Der Außenmehrkant kann an einer Umfangsfläche des Bundes 9 ausgebildet sein.

In Fig. 7b bzw. Fig. 7a sind der Außenmehrkant des Montagebolzens 5c sowie die Ausnehmungen des Rastmittels 8a des Montagebolzens 5c dargestellt.

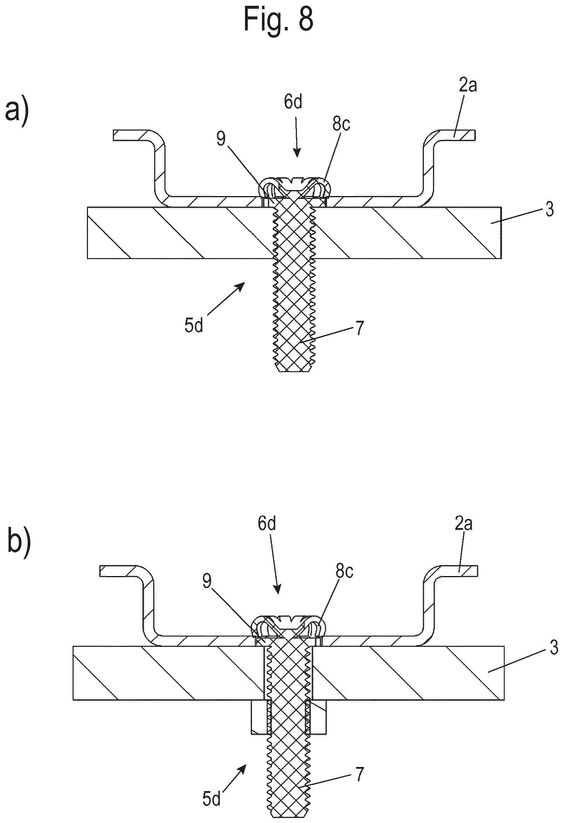

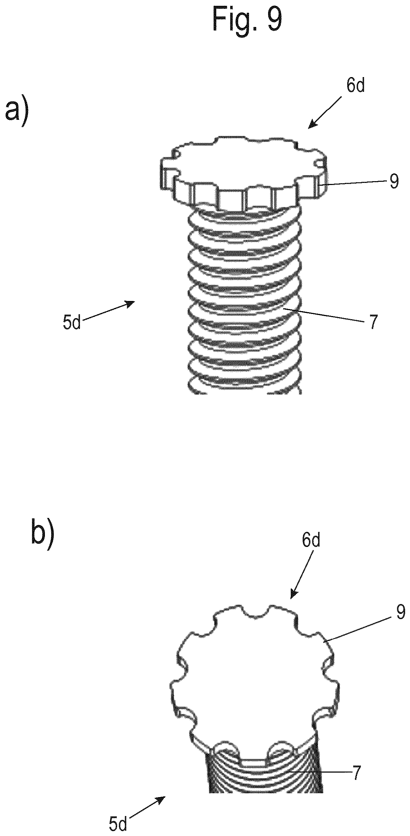

In den Figuren 8a, 8b sowie 9a und 9b ist eine weitere Ausführungsvariante des Montagebolzens 5 dargestellt. Es werden Abweichungen und/oder Ergänzungen zu dem Montagebolzen 5a und 5b nach den Figuren 2a bis 5d beschrieben.

In Fig. 8a ist erkennbar, dass die zwischen den Aussparungen verbleibenden federnden Rastsegmente des Rastmittels 8c einen 2-förmigen Querschnitt aufweisen, wobei das jeweilige freie Ende des jeweiligen Rastsegments in axialer Richtung in Bezug auf den Montagebolzen 5d nach unten bzw. in Richtung der Tragschiene 2a gerichtet ist. Im verrasteten Zustand des Rastmittels 8c liegt das jeweilige freie Ende des jeweiligen Rastsegmentes quasi senkrecht zur Ebene der Montagebasis 3 auf der Tragschiene 2a auf.

Das Rastmittel 8c weist hier segmentartige Ausnehmungen auf. Das Rastmittel 8c ist bevorzugt aus einem metallischen Werkstoff mit guten Federeigenschaften hergestellt. Die Befestigung des Rastmittels 8c auf dem Kopf 6d erfolgt vorzugsweise durch einen Prägeprozess. Die Befestigung kann auch anders erfolgen. Der Kopf 6d des Montagebolzens 5d weist einen Außenvielrund als Antriebsgeometrie zur Drehmomentübertragung auf den Montagebolzen 5d auf.

In Fig. 9a und Fig. 9b ist der Außenvielrund des Montagebolzens 5d sowie die Ausnehmungen des Rastmittels 8c des Montagebolzens 5d dargestellt.

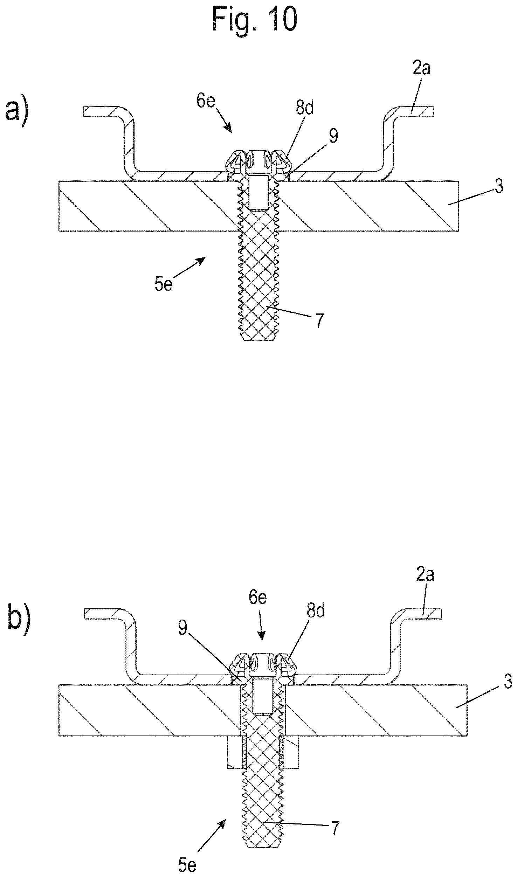

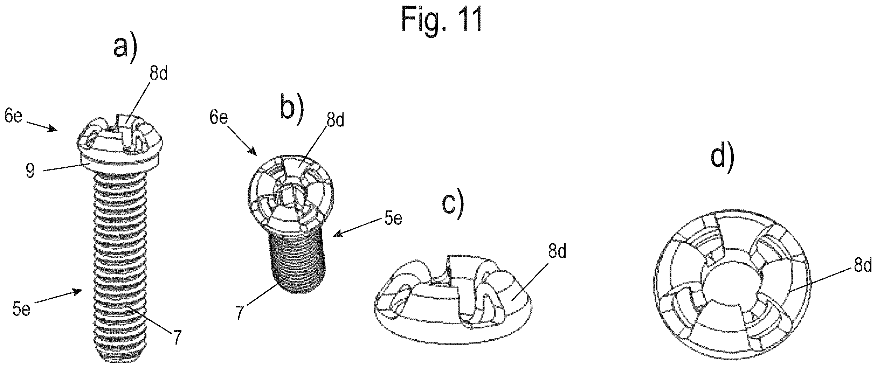

In den Figuren 10a, 10b sowie 11a bis 11d ist eine weitere Ausführungsvariante des Montagebolzens 5 dargestellt. Es werden Abweichungen und/oder Ergänzungen zu dem Montagebolzen 5a und 5b nach den Figuren 2a bis 5d beschrieben.

Die Ausführungsvariante des Montagebolzens 5 nach den Figuren 10a, 10b sowie 11a bis 11d bezieht sich auf die Ausführungsvariante des Montagebolzens 5b nach Fig. 5c und Fig. 5d.

Um auch für eine Durchgangbohrung 4b in Form eines Langlochs eine optimale Überdeckung der Durchgangsbohrung 4b zu erreichen, so dass die Tragschiene 2a dauerhaft fest an der Montagebasis 3 anliegt, weist das Rastmittel 8d des Montagebolzens 5e -unterschiedlich zu dem Rastmittel 8b- eine Kreisringgeometrie und mehrere Aussparungen - hier vier Aussparungen- auf. Dies ist in den Figuren 11a, 11b bzw. 11c und 11d dargestellt.

Dadurch legt sich das jeweilige Rastmittel 8d des jeweiligen Montagebolzens 5e an die jeweilige Durchgangsbohrung 4b an und wird dabei elastisch in radialer Richtung verformt, so dass die Tragschiene 2a in Richtung der Montagebasis 3 geschoben werden kann.

Durch die Aussparungen des Rastmittels 8d können die Federeigenschaften des Rastmittels 8d vorteilhaft einfach eingestellt werden.

Die 12 bis 22 fallen nicht unter den Anspruch 1.

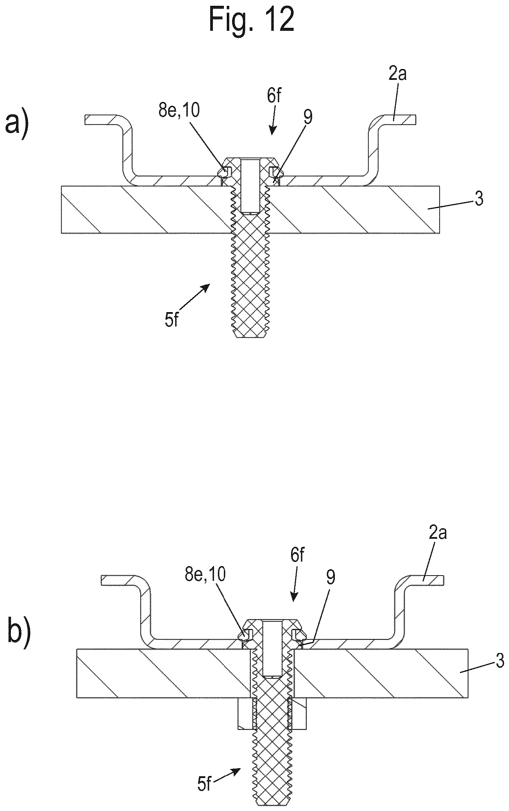

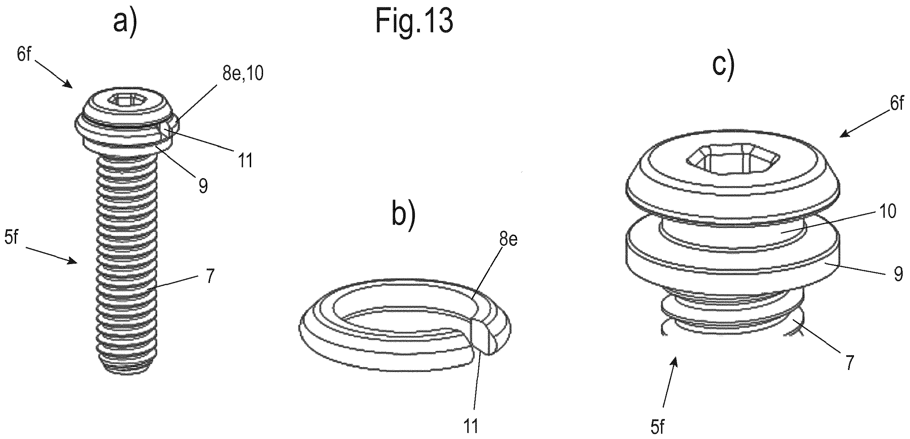

In den Figuren 12a, 12b sowie 13a bis 13c ist eine weitere Ausführungsvariante des Montagebolzens 5 dargestellt. Es werden Abweichungen und/oder Ergänzungen zu dem Montagebolzen 5a und 5b nach den Figuren 2a bis 5d beschrieben.

Bei der Ausführungsvariante des Montagebolzens 5 nach den Figuren 12a, 12b sowie 13a bis 13c handelt es sich um eine Ausführungsvariante des Montagebolzens 5b (siehe Fig. 4b), so dass der Montagebolzen 5f nach Fig. 12a, 12b sowie 13a bis 13c bevorzugt für Durchgangsbohrungen 4b mit einem ovalen Querschnitt bzw. Langloch-Querschnitt vorgesehen ist.

In Fig. 12a ist erkennbar, dass der Kopf 6f des Montagebolzens 5f eine Ringnut 10 aufweist. Die Ringnut 10 ist am Umfang des Kopfes 6f angeordnet. Die Ringnut 10 ist bezogen auf die Länge des Montagebolzens 5f oberhalb des Bundes 9 angeordnet. Der Bund 9 weist hier eine zylinderförmige Geometrie auf.

In Fig. 13a ist der Montagebolzen 5f dargestellt. Das Rastmittel 8e ist hier in der Ringnut 10 angeordnet bzw. füllt hier die Ringnut 10 aus. Der Kopf 6f des Montagebolzens 5f weist einen Innenmehrkant als Antriebsgeometrie zur Drehmomentübertragung auf den Montagebolzen 5f auf. Alternativ kann die Antriebsgeometrie zur Drehmomentübertragung auch als Innenmehrrund gestaltet sein.

In Fig. 13b ist das Rastmittel 8e des Montagebolzens 5f dargestellt. Das Rastmittel 8e ist hier massiv gestaltet und weist in radialer Richtung einen Durchbruch 11 auf. In Fig. 13c sind der Innenmehrkant des Montagebolzens 5f sowie die Ringnut 10 des Montagebolzens 5f dargestellt.

Um auch für eine Durchgangbohrung 4b in Form eines Langlochs eine optimale Überdeckung der Durchgangsbohrung 4b zu erreichen, so dass die Tragschiene 2a dauerhaft fest an der Montagebasis 3 anliegt, ist das Rastmittel 8e des Montagebolzens 5f -unterschiedlich zu dem Rastmittel 8a, 8b- quasi ohne Ausnehmungen ausgeführt.

Ein Rastmittel 8 mit Ausnehmungen -wie das Rastmittel 8a- kann bei einer als Langloch ausgeführten Durchgangsbohrung 4b durch Verkanten oder nicht vollständiges Einrasten zu einer fehlerhaften oder nicht vollständigen Verrastung führen. Dies ist durch das Rastmittel 8e quasi ohne Ausnehmungen vorteilhaft ausgeschlossen.

Das Rastmittel 8e weist deshalb eine durchgehende Kreisringgeometrie auf, die nur durch den Durchbruch 11 unterbrochen wird. Der Durchbruch 11 dient zur Einstellung der Federeigenschaften des Rastmittels 8e. Dadurch legt sich das jeweilige Rastmittel 8e des jeweiligen Montagebolzens 5f gut beim Ansetzen der Tragschiene an die jeweilige Durchgangsbohrung 4b an und wird dabei elastisch in radialer Richtung verformt. Dadurch kann die Tragschiene 2a auf einfache Weise in Richtung der Montagebasis 3 geschoben werden.

Der Kopf 6f mit dem jeweiligen Rastmittel 8e des jeweiligen Montagebolzens 5f überdeckt zumindest abschnittweise pilzkappenartig bzw. nach Art eines Halbrundnietkopfes die jeweilige Durchgangsbohrung 4b, so dass die Tragschiene 2 dauerhaft fest an der Montagebasis 3 anliegt.

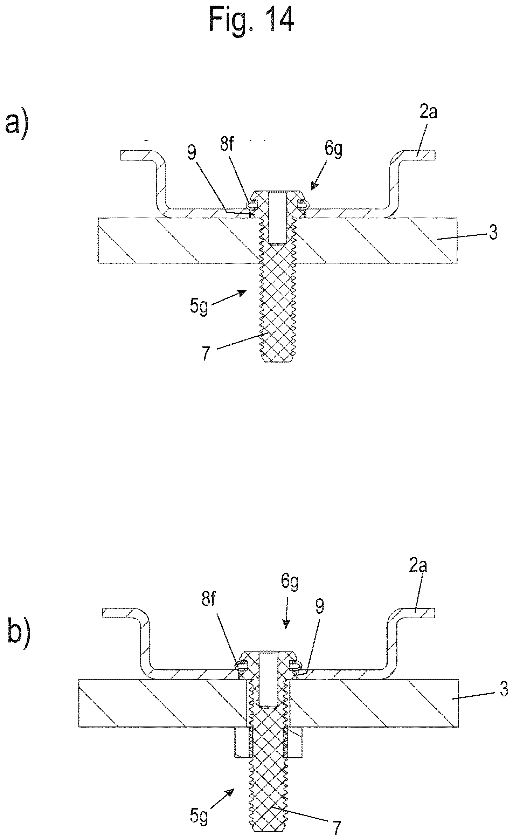

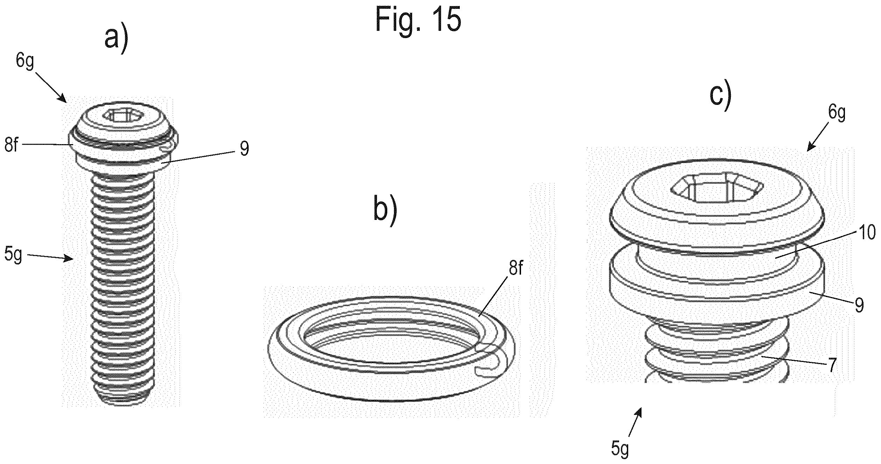

In den Figuren 14a, 14b sowie 15a, 15b und 15c ist eine weitere Ausführungsvariante des Montagebolzens 5 dargestellt. Es werden Abweichungen und/oder Ergänzungen zu dem Montagebolzen 5a und 5b nach den Figuren 2a bis 5d beschrieben.

Bei der Ausführungsvariante des Montagebolzens 5 nach den Figuren 14a, 14b sowie 15a bis 15c handelt es sich um eine Ausführungsvariante des Montagebolzens 5b (siehe Fig. 4b), so dass der Montagebolzen 5g nach Fig. 14a, 14b sowie 15a bis 15c bevorzugt für Durchgangsbohrungen 4b mit einem ovalen Querschnitt bzw. Langloch-Querschnitt vorgesehen ist.

In Fig. 14a ist erkennbar, dass der Kopf 6g des Montagebolzens 5g eine Ringnut 10 aufweist. Die Ringnut 10 ist am Umfang des Kopfes 6g angeordnet. Die Ringnut 10 ist bezogen auf die Länge des Montagebolzens 5g oberhalb des Bundes 9 angeordnet. Der Bund 9 weist hier eine zylinderförmige Geometrie auf.

In Fig. 15a ist der Montagebolzen 5g dargestellt. Das Rastmittel 8f ist hier in der Ringnut 10 angeordnet bzw. füllt hier die Ringnut 10 aus. Der Kopf 6g des Montagebolzens 5g weist eine Antriebsgeometrie zur Drehmomentübertragung auf den Montagebolzen 5g auf. Diese ist hier als Innenmehrkant ausgeführt. Alternativ kann die Antriebsgeometrie zur Drehmomentübertragung auch auf andere Weise, so als Innenmehrrund gestaltet sein.

In Fig. 15b ist das Rastmittel 8f des Montagebolzens 5 dargestellt. Das Rastmittel 8f ist hier hohl gestaltet (siehe Fig. 14a und Fig. 14b) und ist in Form eines radial nach innen offenen "C" gestaltet.

In Fig. 15c sind der Innenmehrkant des Montagebolzens 5g sowie die Ringnut 10 des Montagebolzens 5g dargestellt.

Um auch für eine Durchgangbohrung 4b in Form eines Langlochs eine optimale Überdeckung der Durchgangsbohrung 4b zu erreichen, so dass die Tragschiene 2a dauerhaft fest an der Montagebasis 3 anliegt, ist das Rastmittel 8f des Montagebolzens 5g - unterschiedlich zu dem Rastmittel 8a, 8b - ohne Ausnehmungen ausgeführt.

Ein Rastmittel 8 mit Ausnehmungen -wie das Rastmittel 8a- kann bei einer als Langloch ausgeführten Durchgangsbohrung 4b durch Verkanten oder nicht vollständiges Einrasten zu einer fehlerhaften oder nicht vollständigen Verrastung führen. Dies ist durch das Rastmittel 8f ohne Ausnehmungen vorteilhaft ausgeschlossen.

Das Rastmittel 8f ist deshalb ringförmig gestaltet und weist eine C-förmige Querschnittsgeometrie auf, wobei das "C" radial nach innen geöffnet ist. Dadurch legt sich das jeweilige Rastmittel 8f des jeweiligen Montagebolzens 5g beim Ansetzen der Tragschiene gut an die jeweilige Durchgangsbohrung 4b an und wird beim weiteren Absenken der Tragschiene senkrecht zur Montagebasis in -Z-Richtung elastisch in radialer Richtung verformt. Dadurch kann die Tragschiene 2a in Richtung der Montagebasis 3 geschoben werden. Dabei ist über die Dimension des Durchbruchs 11 die Federeigenschaft des Rastmittels 8f einstellbar.

Der Kopf 6g mit dem jeweilige Rastmittel 8f des jeweiligen Montagebolzens 5g überdeckt zumindest abschnittweise pilzkappenartig bzw. nach Art eines Halbrundnietkopfes die jeweilige Durchgangsbohrung 4b, so dass die Tragschiene 2a dauerhaft fest an der Montagebasis 3 anliegt.

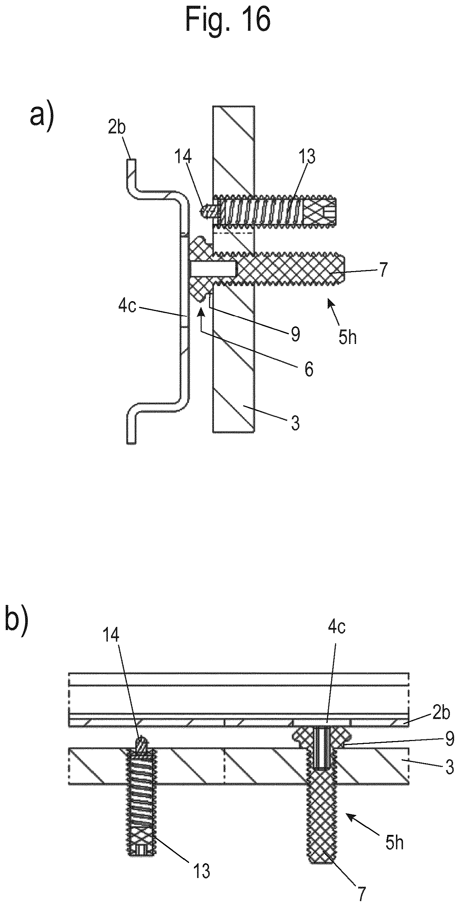

In den Figuren 16a, 16b, 16c, 16d und 17a, 17b, 17c, 17d sowie 18a, 18b, 18c, 18d ist eine weitere Ausführungsvariante des Montagebolzens 5 dargestellt.

Es ist auch hier vorgesehen, dass in einem ersten Montageschritt sämtliche Gehäuse 1 mit Kontakt- und Funktionselementen in einer definierten Menge und Reihenfolge auf der Tragschiene 2 aneinandergereiht werden.

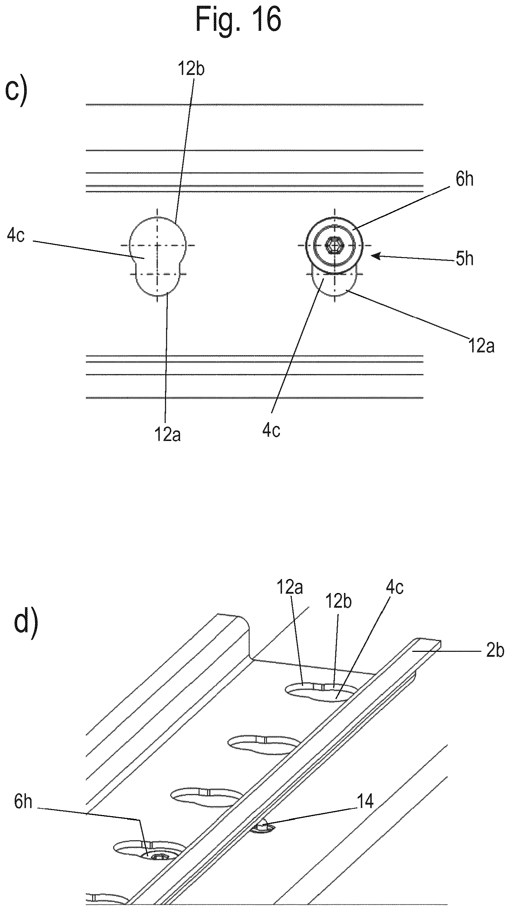

Die Tragschiene 2b nach Fig. 16a, 16b, 16c, 16d weist Durchgangsbohrungen 4 auf. Die Durchgangsbohrungen 4, die für die Montagebolzen 5 vorgesehen sind, sind hier als Durchgangsbohrungen 4c mit einem schlüssellochartigen Querschnitt ausgeführt.

Die Durchgangsbohrung 4c mit dem schlüssellochartigen Querschnitt weist somit einen ersten Bereich mit einem ersten Durchmesser 12a und einen zweiten Bereich mit einem zweiten Durchmesser 12b auf. Der erste Durchmesser 12a ist kleiner als der zweite Durchmesser 12b der Durchgangsbohrung 4c.

Die Dimensionen des ersten Durchmessers 12a und des zweiten Durchmessers 12b der Durchgangsbohrung 4c sind derart gewählt, dass der erste, kleinere Durchmesser 12a größer ist als der Durchmesser des Schafts 7 des Montagebolzens 5h und der zweite, größere Durchmesser 12b größer ist als der Durchmesser des Kopfes 6h des Montagebolzens 5h. Insofern arbeiten die Durchgangsbohrung 4c und der Montagebolzen 5h als eine Art Bajonettverschluss.

In die Montagebasis 3 sind ferner federnde Druckstücke 13 eingeschraubt. Das jeweilige federnde Druckstück 13 weist einen federnden Zapfen 14 auf. Das jeweilige federnde Druckstück 13 ist derart in die Montagebasis 3 eingeschraubt, dass der jeweilige federnde Zapfen 14 im unbelasteten Zustand vollständig aus der Montagebasis 3 herausragt, so dass die im unbelasteten Zustand aus der Montagebasis 3 ragenden federnden Zapfen 14 als eine Art Anschlag für die zu montierende Tragschiene 2b dienen.

In einem folgenden Montageschritt werden die Montagebolzen 5h sowie die federnden Druckstücke 13 in die jeweils dafür vorgesehenen Gewindebohrungen in der Montagebasis 3 geschraubt. Die Gewindebohrungen, die für die Montagebolzen 5h sowie für die federnden Druckstücke 13 vorgesehen sind, korrespondieren jeweils mit den Durchgangsbohrungen 4c in der Tragschiene 2b (siehe z.B. Fig. 16c, 16d). Der Montagebolzen 5h weist einen Kopf 6h (siehe z.B. Fig. 16b) sowie einen Schaft 7 auf.

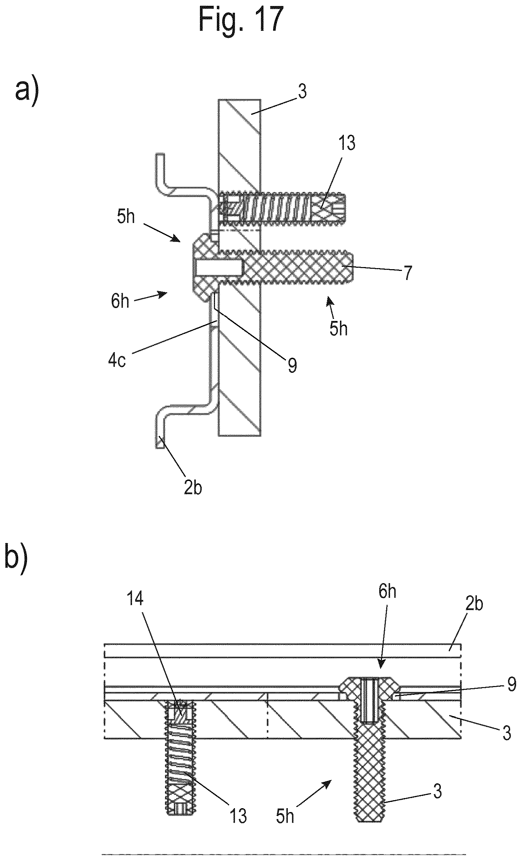

In einem weiteren Montageschritt wird die im ersten Montageschritt mit Kontakt- und Funktionselementen 1 vorbereitete Tragschiene 2b senkrecht über die jeweiligen Montagebolzen 5h auf die Montagebasis 3 geschoben, so dass der Kopf 6h des Montagebolzens 5h den großen Durchmesser 12b der jeweiligen Durchgangsbohrung 4c durchgreift. Dabei wird jeweils der Zapfen 14 des federnden Druckstücks 13 vollständig eingefedert bzw. zusammengedrückt (siehe dazu Fig. 17a, 17b).

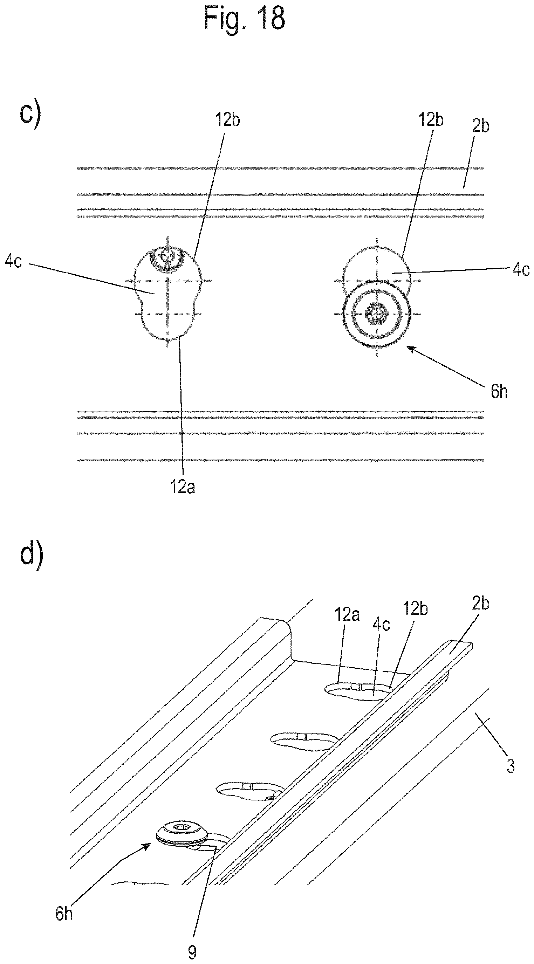

In einem abschließenden Montageschritt wird die Tragschiene 2b derart verschoben, dass jeweils der Schaft 7 des Montagebolzens 5h den kleineren Durchmesser 12a der Durchgangsbohrung 4c durchgreift, so dass der Kopf 6h des Montagebolzens 5h den kleinen Durchmesser 12a der Durchgangsbohrung 4c pilzkopfartig überlappt. Durch die Bewegung der Tragschiene 2b federt der jeweilige Zapfen 14 des jeweiligen federnden Druckstücks 13 wieder aus. Dabei legt sich der jeweilige Zapfen 14 tangential an eine Innenseite der Durchgangsbohrung 4c im Bereich des größeren Durchmessers 12b an (siehe dazu Fig. 18c, 18d).

In Fig. 16a, 16b, 16c, 16d ist eine Tragschiene 2b vor der Montage mit den Montagebolzen 5h dargestellt. Es ist dargestellt, dass die Durchgangsbohrungen 4c mit den Montagebolzen 5h korrespondieren.

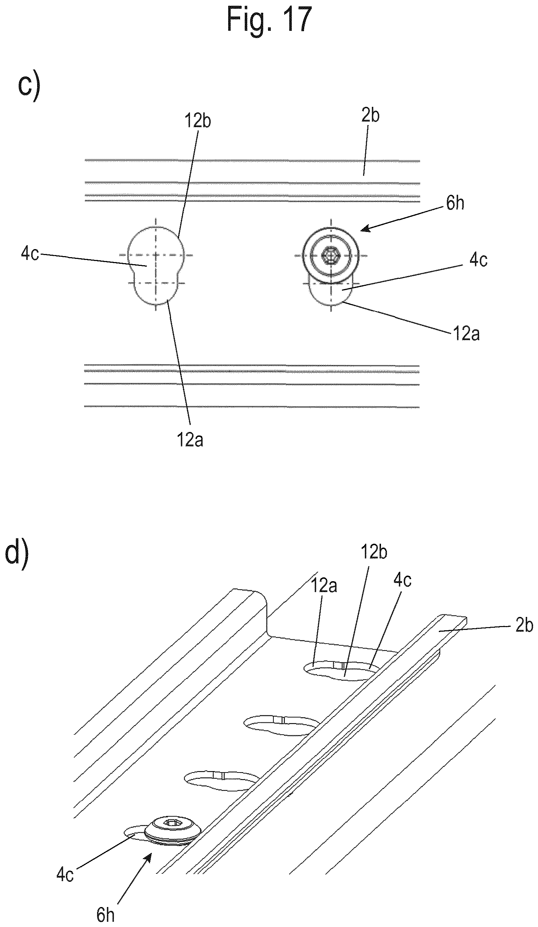

In den Fig. 17a, 17b, 17c, 17d ist die Tragschiene 2b während der werkzeuglosen Montage auf die Montagebasis 3 dargestellt. In Fig. 17a und 17b ist dargestellt, wie dabei der Kopf 6h des Montagebolzens 5h die jeweilige Durchgangsbohrung 4c an ihrem größeren Durchmesser 12b durchgreift und der Zapfen 14 des jeweiligen federnden Druckstücks 13 vollständig eingefedert ist. Die Tragschiene 2b liegt so flächig an der Montagebasis 3 an.

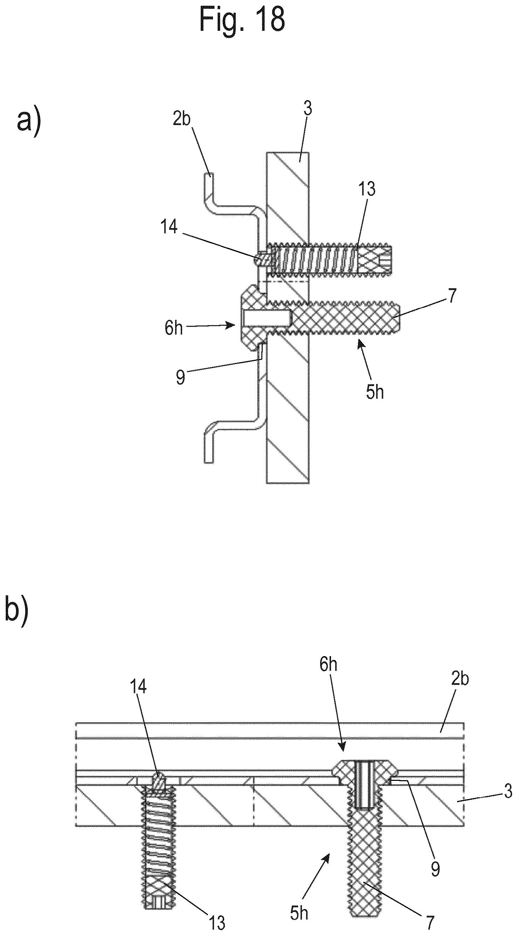

In den Fig. 18a, 18b, 18c, 18d ist die Tragschiene 2b nach der werkzeuglosen Montage auf die Montagebasis 3 dargestellt. In den Fig. 18a, 18b, 18c, 18d ist dargestellt, wie dabei der jeweilige Kopf 6h des jeweiligen Montagebolzens 5h den kleineren Durchmesser 12a der jeweiligen Durchgangsbohrung 4c pilzkappenartig bzw. nach Art eines Halbrundnietkopfes überdeckt, so dass die Tragschiene 2b dauerhaft fest an der Montagebasis 3 anliegt.

In den Fig. 16a, b, 17a, b, 18a, b, ist dargestellt, dass der Kopf 6h des Montagebolzens 5h einen zylinderförmigen Bund 9 aufweist. Der Bund 9 ist derart gestaltet, dass er den kleineren Durchmesser 12a der Durchgangsbohrung 4c axial und radial ganz oder jedenfalls im Wesentlichen (z.B. bis auf Aussparungen einer Drehmomentübertragungskontur) vollständig ausfüllt, so dass die Höhe des Bundes der Dicke der Tragschiene 2b im Bereich der Durchgangsbohrung 4c entspricht.

In vertikaler Richtung schließt sich oberhalb des Bundes 9 der Abschluss des Kopfes 6h an, der pilzkappenartig bzw. nach Art eines Halbrundnietkopfes gestaltet ist.

Dadurch wird vorteilhaft erreicht, dass die Befestigung der Tragschiene 2b durch den Montagebolzen 5h und der Tragschiene 2b dauerhaft sicher ist. Der Kopf 6h des Montagebolzens 5h weist einen Innenmehrkant als Antriebsgeometrie zur Drehmomentübertragung auf den Montagebolzen 5h auf. Alternativ kann die Antriebsgeometrie zur Drehmomentübernahme auch als Innenmehrrund gestaltet sein. Abweichend von den weiter oben beschriebenen Ausführungsvarianten des Montagebolzens 5 ist das Rastmittel 8 hier als federndes Druckstück 13 bzw. als federnder Zapfen 14 -also als separates Bauteil- gestaltet. Das federnde Druckstück 13 sorgt mit seinem federnden Zapfen 14 dafür, dass der Schaft 7 des Montagebolzens 5h dauerhaft sicher den kleineren Durchmesser 12a der Durchgangsbohrung 4c durchgreift, so dass der pilzkappenartig bzw. nach Art eines Halbrundnietkopfes gestaltete Kopf 6h des Montagebolzens 5h dauerhaft sicher auf der Tragschiene 2b im Bereich des kleineren Durchmessers 12a der Durchgangsbohrung aufliegt, so dass die dauerhafte Befestigung der Tragschiene 2b an der Montagebasis 3 gewährleistet ist (siehe dazu Fig. 18a, 18b, 18c, 18d).

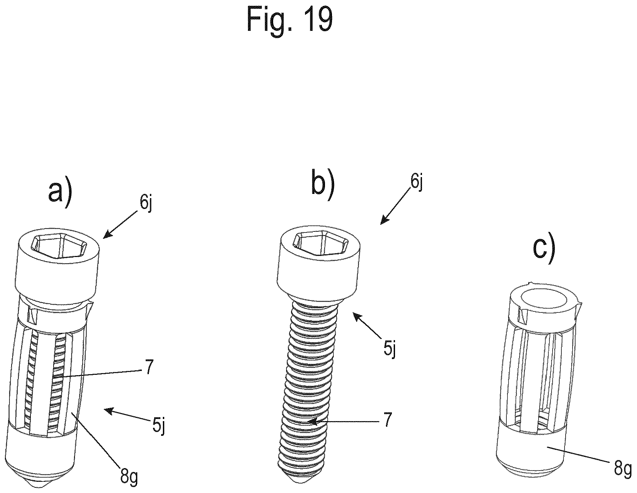

In den Figuren 19a, 19b, 19c und 20a, 20b, 20c sowie 21a, 21b, 21c ist eine weitere Ausführungsvariante des Montagebolzens 5 dargestellt.

Es ist auch hier vorgesehen, dass in einem ersten Montageschritt sämtliche Gehäuse 1 mit Kontakt- und Funktionselementen in einer definierten Menge und Reihenfolge auf der Tragschiene 2 aneinandergereiht werden.

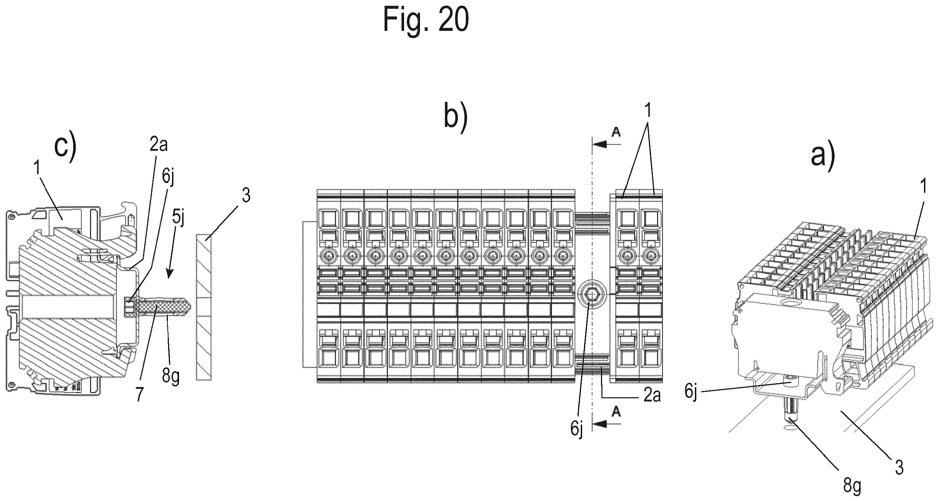

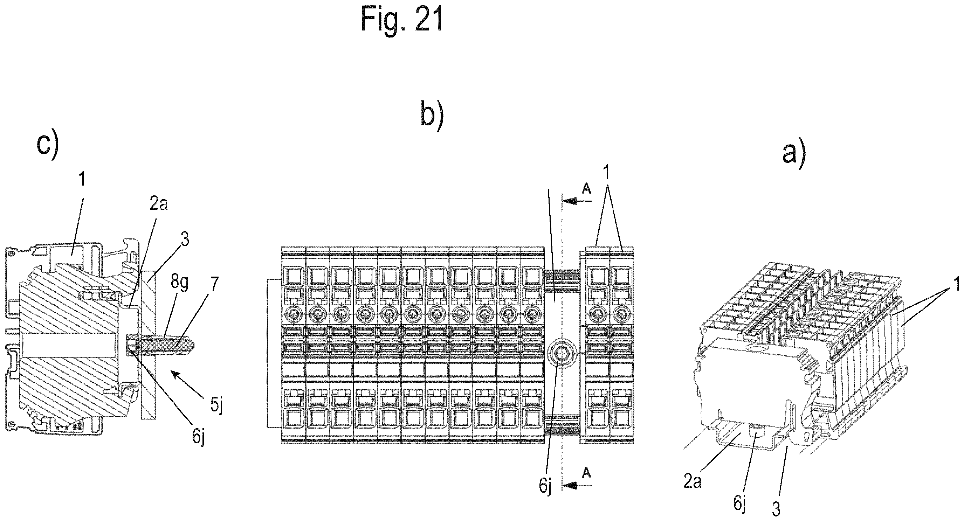

Die Tragschiene 2a nach Fig. 20a, 20b, 20c bzw. Fig. 21a, 21b, 21c weist Durchgangsbohrungen 4 auf. Die Durchgangsbohrungen 4, die für die Montagebolzen 5 vorgesehen sind, sind hier als Durchgangsbohrungen 4a mit einem zylindrischen Querschnitt ausgeführt.

In einem folgenden Montageschritt werden die Montagebolzen 5j durch die Durchgangsbohrungen 4a der Tragschiene 2a gesteckt. Dies geschieht bevorzugt an solchen Stellen, an denen ein bereits vormontierter Abstandshalter (schraffiert dargestelltes Teil in Fig. 20c) aufgerastet ist.

In einem darauf folgenden Montageschritt wird auf den Schaft 7 des jeweilige Montagebolzens 5j jeweils ein dafür vorgesehenes dübelartiges Rastmittel 8g aufgesetzt (siehe dazu Fig. 20a und Fig. 20c). Der Montagebolzen 5j weist einen Kopf 6j (siehe z.B. Fig. 19a, 19b) sowie einen Schaft 7 auf.

In einem weiteren Montageschritt wird die im ersten Montageschritt mit den Gehäusen für Kontakt- und Funktionselementen 1 sowie mit dem in dem darauf folgenden Montageschritt durch die jeweilige Durchgangsbohrung 4a gesteckten Montagebolzen 5j und in dem darauf folgenden Montageschritten auf den Schaft 7 des Montagebolzens 5j aufgesetzten Rastmittels 8g vorbereitete Tragschiene 2a senkrecht über eine jeweilige Durchgangsbohrung der Montagebasis 3 geschoben, so dass der Schaft 7 mit dem Rastmittel 8g des Montagebolzens 5j die jeweilige Durchgangsbohrung der Montagebasis 3 durchgreift (siehe Fig. 21c).

Das Rastmittel 8 ist hier als dübelartiges Rastmittel 8g ausgeführt, dessen Rastfunktion -wie bei einem Dübel- durch Einschrauben des Montagebolzens 5j aktiviert wird. Das Rastmittel 8g arbeitet demnach nach dem Prinzip einer Ringschnappverbindung. Eine elastische Verformung des Rastmittels 8g ist durch am Umfang des Rastmittels 8g angeordnete Ausnehmungen gewährleistet. Zwischen den Ausnehmungen ergeben sich demnach durchgehende Stege am Umfang des Rastmittels 8g. Durch die Ausnehmungen können die Federeigenschaften des Rastmittels 8g vorteilhaft vordefiniert werden.

Der Montagebolzen 5j weist einen Kopf 6j (siehe z.B. Fig. 19a, 19b) sowie einen Schaft 7 auf. Der Kopf 6j des Montagebolzens 5j weist einen Innenmehrkant als Antriebsgeometrie zur Drehmomentübertragung auf den Montagebolzen 5j auf. Alternativ kann die Antriebsgeometrie zur Drehmomentmitnahme auch als Innenmehrrund gestaltet sein.

Der Schaft 7 weist ein Außengewinde auf. Der Durchmesser des Außengewindes und der Innendurchmesser des Rastmittels 8g korrespondieren derart miteinander, dass das Rastmittel 8d auf das Außengewinde aufgeschraubt werden kann. Durch weiteres Einschrauben des Montagebolzens 5j in das Rastmittel 8g entsteht eine elastische Verformung des Rastmittels 8g durch radiales Aufspreizen der Stege zwischen den Ausnehmungen des Rastmittels 8g. Das radiale Aufspreizen der Stege erfolgt durch die Verkürzung der wirksamen Länge des Rastmittels 8g durch das weitere Einschrauben des Montagebolzens 5j in das Rastmittel 8g.

In einem abschließenden Montageschritt wird der Montagebolzen 5j über den Innenmehrkant in das dübelartige Rastmittel 8g eingeschraubt, so dass das Rastmittel 8g seine Rastfunktion entfaltet (siehe dazu Fig. 21c) und der Montagebolzen durch das Rastmittel 8g in der Durchgangsbohrung der Montagebasis 3 festgelegt und gehalten wird.

Dadurch wird vorteilhaft sichergestellt, dass die Befestigung der Tragschiene 2a durch den Montagebolzen 5j dauerhaft sicher ist.

Der oder die Montagebolzen (5a, 5b, 5c, 5d, 5e, 5f, 5g, 5h, 5j) können nach einer bevorzugten Ausführungsform dazu in der Lage sein, den PE- Strom der Tragschiene (2a, 2b) sicher abzuführen oder die Verbindung von Tragschiene (2a,2b) zu Montagebasis (3) derart zu beeinflussen, dass dies möglich ist. Dazu sind der oder die Montagebolzen (5a, 5b, 5c, 5d, 5e, 5f, 5g, 5h, 5j) dazu ausgelegt - beispielsweise aus gut leitendem Metall gefertigt oder damit beschichtet und leietend verbunden und angeordnet - den PE- Strom der Tragschiene (2a, 2b) abzuführen. Sie können auch derart ausgelegt sein, die Verbindung von der Tragschiene (2a,2b) zur Montagebasis (3) derart zu beeinflussen, z.B. wie ein Schalter, dass dies möglich ist.

### Bezugszeichenliste

- 1: Gehäuse
- 2, 2a, b: Tragschiene
- 3: Montagebasis
- 4, 4a, b, c: Durchgangsbohrung
- 5, 5a, b, c, d, e, f, g, h, j: Montagebolzen
- 6, 6a, b, c, d, e, f, g, h, j: Kopf
- 7: Schaft
- 8, 8a, b, c, d, e, f, g: Rastmittel
- 9: Bund
- 10: Ringnut
- 11: Durchbruch
- 12a, b: Durchmesser
- 13: Federndes Druckstück
- 14: Zapfen
- 20: Grundschenkel
- 21,22: Ränder

## Patentansprüche

1. Anordnung mit einer Tragschiene (2a, 2b) und einer Montagebasis (3), wobei auf der Tragschiene eine Mehrzahl von aneinanderreihbaren Gehäusen, die mit elektrischen Kontakt- und/oder Funktionselementen (1) versehen sind, anordenbar sind, wobei die Tragschiene auf die Montagebasis (3) auch in einem Zustand montierbar ist, wenn die Gehäuse vor der Montage der Tragschiene (2a, 2b) bereits auf die Tragschiene (2a, 2b) aufgereiht worden sind, wobei die Tragschiene (2a, 2b) durch zwei oder mehr Montagebolzen (5a, 5b, 5c, 5d, 5e), die vor der Montage der Tragschiene (2a, 2b) an die Montagebasis (3) angesetzt sind, an der Montagebasis (3) befestigt ist, wobei die Montagebolzen und die Tragschiene korrespondierend derart ausgestaltet sind, dass die Tragschiene (2a, 2b) werkzeuglos auf die Montagebolzen (5a, 5b, 5c, 5d, 5e) aufsetzbar und an diesen arretierbar ist, wobei die Tragschiene (2a, 2b) Durchgangsbohrungen (4a, 4b, 4c) aufweist, wobei die Montagebolzen (5a, 5b, 5c, 5d, 5e) einen Kopf (6a, 6b, 6c, 6d, 6e,) sowie einen Schaft (7) mit einem im Vergleich zum Kopf kleineren Durchmesser aufweisen, wobei der Kopf (6a, 6b, 6c, 6d, 6e) des jeweiligen Montagebolzens (5a, 5b, 5c, 5d, 5e) eines oder mehrere Rastmittel (8a, 8b, 8c, 8d, 8e,) aufweist, **dadurch gekennzeichnet, dass** das Rastmittel (8a, 8c, 8d) jedes Kopfes im verrasteten Zustand mit einer jeweiligen der Durchgangsbohrungen so zusammenwirkt, dass diese im Bezug auf das Rastmittel (8a, 8c, 8d) als Gegenrastmittel nach dem Prinzip einer Ringschnappverbindung wirkt, wobei das Rastmittel (8a, 8c, 8d,) segmentartige Ausnehmungen aufweist, so dass es in mehrere Rastsegmente unterteilt ist.

2. Anordnung nach Anspruch 1, **dadurch gekennzeichnet, dass** die Durchgangsbohrungen (4a, 4b, 4c) an der Tragschiene in einem definierten Muster angeordnet sind.

3. Anordnung nach Anspruch 1 oder 2, **dadurch gekennzeichnet, dass** die Durchgangsbohrungen (4a, 4b, 4c) einen mehreckigen und/oder kreisförmigen Querschnitt und/oder einen ovalen Querschnitt und/oder einen langlochartigen Querschnitt und/oder einen schlüssellochartigen Querschnitt aufweisen.

4. Anordnung nach einem der vorstehenden Ansprüche, **dadurch gekennzeichnet, dass** das Rastmittel (8a, 8b, 8c, 8d, 8e) einen C-förmigen oder einen L-förmigen Querschnitt aufweist.

5. Anordnung nach einem der vorstehenden Ansprüche, **dadurch gekennzeichnet, dass** das freie Ende des jeweiligen Rastsegments in radialer Richtung in Bezug auf den Montagebolzen (5a, 5c, 5d, 5e) nach innen bzw. in Richtung des Montagebolzens (5a, 5c, 5d, 5e) gerichtet ist.

6. Anordnung nach einem der vorstehenden Ansprüche, **dadurch gekennzeichnet, dass** das Rastmittel (8b, 8f) hohl und in Form eines nach radial innen geöffneten "C" gestaltet ist.

7. Anordnung nach einem der vorstehenden Ansprüche, **dadurch gekennzeichnet, dass** das Rastmittel (8a, 8b, 8c, 8d, 8e) aus einem metallischen Werkstoff mit guten Federeigenschaften hergestellt ist.

8. Anordnung nach einem der vorgenannten Ansprüche, **dadurch gekennzeichnet, dass** die Montagebasis (3) eine zu der jeweiligen Durchgangsbohrung (4a, 4b, 4c) korrespondierende Gewindebohrung aufweist.

9. Anordnung nach Anspruch 8, **dadurch gekennzeichnet, dass** der jeweilige Montagebolzen (5a, 5b, 5c, 5d, 5e) mit seinem Schaft (7), der mit einem Bolzengewinde versehen ist, eine Durchgangsbohrung der Montagebasis (3) und ein Mutterngewinde einer Mutter durchgreift.

10. Anordnung nach einem der vorgenannten Ansprüche, **dadurch gekennzeichnet, dass** die Köpfe (6a, 6b, 6c, 6d, 6e,) der Montagebolzen (5a, 5b, 5c, 5d, 5e) einen Bund (9) aufweisen.

11. Anordnung nach Anspruch 10, **dadurch gekennzeichnet, dass** der Bund (9) die Durchgangsbohrung (4a, 4b) ausfüllt, so dass die Höhe des Bundes (9) der Dicke der Tragschiene (2a, 2b) im Bereich der Durchgangsbohrung (4a, 4b) entspricht.

12. Anordnung nach einem der vorgenannten Ansprüche, **dadurch gekennzeichnet, dass** der Kopf (6a, 6b, 6c, 6d, 6e,) oder der Bund (9) des Montagebolzens (5a, 5b, 5c, 5d, 5e,) eine Antriebsgeometrie zur Drehmomentübertragung aufweist, wobei die Antriebsgeometrie zur Drehmomentübertragung als Innenmehrkant oder als Außenmehrkant oder als Innenmehrrund oder als Außenmehrrund gestaltet ist.

13. Anordnung nach einem oder mehreren der vorgenannten Ansprüche, **dadurch gekennzeichnet, dass** der oder die Montagebolzen (5a, 5b, 5c, 5d, 5e) dazu ausgelegt und angeordnet sind, einen PE- Strom der Tragschiene (2a, 2b) abzuführen und/oder dass sie derart ausgelegt sind, die Verbindung von der Tragschiene (2a,2b) zur Montagebasis (3) derart zu beeinflussen, dass dies möglich ist.

## Claims

1. An arrangement comprising a support rail (2a, 2b) and a mounting base (3), wherein on the support rail a plurality of housings that can be strung together and that are equipped with electrical contact and/or functional elements (1) can be arranged, said support rail being mountable on the mounting base (3) even when the housings have already been strung onto the support rail (2a, 2b) before the support rail is mounted, said support rail (2a, 2b) being attached to the mounting base (3) by means of two or more mounting pins (5a, 5b, 5c, 5d, 5e) which have been put in place on the mounting base (3) before the support rail (2a, 2b) is mounted, wherein the mounting pins and the support rail are correspondingly configured such that the support rail (2a, 2b) can be placed onto the mounting pins (5a, 5b, 5c, 5d, 5e) and locked in place thereon without using a tool, wherein the support rail (2a, 2b) has through bores (4a, 4b, 4c), wherein the mounting pins (5a, 5b, 5c, 5d, 5e) have a head (6a, 6b, 6c, 6d, 6e) and a shaft (7) which has a smaller diameter compared to the head, wherein the head (6a, 6b, 6c, 6d, 6e) of the respective mounting pin (5a, 5b, 5c, 5d, 5e) has one or several locking means (8a, 8b, 8c, 8d, 8e, 8f, 8g), **characterised in that** the locking means (8a, 8b, 8c, 8d, 8e) of each head, in the locked state, such cooperates with a respective one of the through bores, that this through bore acts as a mating locking means relative to the locking means (8a, 8c, 8d) according to the principle of an annular snap-fit connection, wherein the locking mean (8a, 8c, 8d) has segment-like recesses, so that it is divided into several locking bars.

2. The arrangement according to Claim 1, **characterised in that** the through bores (4a, 4b, 4c) being arranged in a defined pattern on the support rail.

3. The arrangement according to Claim 1 or 2, **characterised in that** the through bores (4a, 4b, 4c) have a polygonal and/or circular cross-section and/or an oval cross-section and/or an elongated cross-section and/or a keyhole-like cross-section.

4. The arrangement according to any one of the preceding claims, **characterised in that** the locking means (8a, 8b, 8c, 8d, 8e) has a C-shaped or an L-shaped cross-section.

5. The arrangement according to any one of the preceding claims, **characterised in that** the free end of the respective locking segment, in the radial direction relative to the mounting pin (5a, 5c, 5d, 5e), is directed inwards or in the direction of the mounting pin (5a, 5c, 5d, 5e).

6. The arrangement according to any one of the preceding claims, **characterised in that** the locking means (8b, 8f) is formed to be hollow and in the form of a "C" which is opened radially inwards.

7. The arrangement according to any one of the preceding claims, **characterised in that** the locking means (8a, 8b, 8c, 8d, 8e) is manufactured from a metallic material having good spring characteristics.

8. The arrangement according to any one of the preceding claims, **characterised in that** the mounting base (3) has a threaded bore corresponding to the respective through bore (4a, 4b, 4c).

9. The arrangement according to claim 8, **characterised in that** the respective mounting pin (5a, 5b, 5c, 5d, 5e) engages through a through bore of the mounting base (3) and a female thread of a nut by its shaft (7) which is equipped with a male thread.

10. The arrangement according to any one of the preceding claims, **characterised in that** the heads (6a, 6b, 6c, 6d, 6e) of the mounting pins (5a, 5b, 5c, 5d, 5e) have a collar (9).

11. The arrangement according to Claim 10, **characterised in that** the collar (9) fills the through bore (4a, 4b), such that the height of the collar (9) corresponds to the thickness of the support rail (2a, 2b) in the region of the through bore (4a, 4b).

12. The arrangement according to any one of the preceding claims, **characterised in that** the head (6a, 6b, 6c, 6d, 6e) or the collar (9) of the mounting pin (5a, 5b, 5c, 5d, 5e) has a driving geometry for the transmission of torque, wherein the driving geometry for the transmission of torque is formed as an internal polygon or as an external polygon or as an internal shape with multiple rounded parts or as an external shape with multiple rounded parts.

13. The arrangement according to any one or more of the aforementioned claims, **characterised in that** the mounting pin(s) (5a, 5b, 5c, 5d, 5e) are designed and arranged to dissipate a PE current of the support rail (2a, 2b) and/or **in that** they are designed to influence the connection of the support rail (2a,2b) to the mounting base (3) such that this is possible.

## Revendications

1. Agencement comprenant un rail porteur (2a, 2b) et une base de montage (3), dans lequel une pluralité de boîtiers pouvant être alignés les uns à côté des autres et pourvus d'éléments de contact et/ou fonctionnels électriques (1) peuvent être disposés sur le rail porteur, dans lequel le rail porteur peut être monté sur la base de montage (3) même dans un état où les boîtiers ont déjà été alignés sur le rail porteur (2a, 2b) avant le montage du rail porteur (2a, 2b), dans lequel le rail porteur (2a, 2b) est fixé à la base de montage (3) par deux ou plusieurs boulons de montage (5a, 5b, 5c, 5d, 5e) qui sont placés avant le montage du rail porteur (2a, 2b) sur la base de montage (3), dans lequel les boulons de montage et le rail porteur sont conçus de manière correspondante de telle sorte que le rail porteur (2a, 2b) peut être positionné sans outil sur les boulons de montage (5a, 5b, 5c, 5d, 5e) et être bloqué sur ceux-ci, dans lequel le rail porteur (2a, 2b) présente des trous traversants (4a, 4b, 4c), dans lequel les boulons de montage (5a, 5b, 5c, 5d, 5e) présentent une tête (6a, 6b, 6c, 6d, 6e) ainsi qu'une tige (7) d'un diamètre inférieur à celui de la tête, dans lequel la tête (6a, 6b, 6c, 6d, 6e) du boulon de montage respectif (5a, 5b, 5c, 5d, 5e) présente un ou plusieurs moyens d'encliquetage (8a, 8b, 8c, 8d, 8e), **caractérisé en ce que** le moyen d'encliquetage (8a, 8c, 8d) de chaque tête coopère, à l'état encliqueté, avec l'un respectif des trous traversants de telle sorte que celui-ci agit, par rapport au moyen d'encliquetage (8a, 8c, 8d), comme un moyen d'encliquetage complémentaire selon le principe d'une liaison par encliquetage annulaire, dans lequel le moyen d'encliquetage (8a, 8c, 8d) présente des évidements en forme de segments, de sorte qu'il est divisé en plusieurs segments d'encliquetage.

2. Agencement selon la revendication 1, **caractérisé en ce que** les trous traversants (4a, 4b, 4c) sont disposés sur le rail porteur selon un motif défini.

3. Agencement selon la revendication 1 ou 2, **caractérisé en ce que** les trous traversants (4a, 4b, 4c) présentent une section transversale polygonale et/ou circulaire et/ou une section transversale ovale et/ou une section transversale en forme de trou oblong et/ou une section transversale en forme de trou de serrure.

4. Agencement selon l'une des revendications précédentes, **caractérisé en ce que** le moyen d'encliquetage (8a, 8b, 8c, 8d, 8e) présente une section transversale en forme de C ou en forme de L.

5. Agencement selon l'une des revendications précédentes, **caractérisé en ce que** l'extrémité libre du segment d'encliquetage respectif est dirigée vers l'intérieur ou en direction du boulon de montage (5a, 5c, 5d, 5e) dans la direction radiale par rapport au boulon de montage (5a, 5c, 5d, 5e).

6. Agencement selon l'une des revendications précédentes, **caractérisé en ce que** le moyen d'encliquetage (8b, 8f) est creux et réalisé en forme de "C" ouvert radialement vers l'intérieur.

7. Agencement selon l'une des revendications précédentes, **caractérisé en ce que** le moyen d'encliquetage (8a, 8b, 8c, 8d, 8e) est fabriqué en un matériau métallique présentant de bonnes propriétés élastiques.

8. Agencement selon l'une des revendications précédentes, **caractérisé en ce que** la base de montage (3) présente un trou taraudé correspondant au trou traversant respectif (4a, 4b, 4c).

9. Agencement selon la revendication 8, **caractérisé en ce que** le boulon de montage respectif (5a, 5b, 5c, 5d, 5e) traverse avec sa tige (7), qui est pourvue d'un filetage de boulon, un trou traversant de la base de montage (3) et un filetage d'écrou d'un écrou.

10. Agencement selon l'une des revendications précédentes, **caractérisé en ce que** les têtes (6a, 6b, 6c, 6d, 6e) des boulons de montage (5a, 5b, 5c, 5d, 5e) présentent un collet (9).

11. Agencement selon la revendication 10, **caractérisé en ce que** le collet (9) remplit le trou traversant (4a, 4b), de sorte que la hauteur du collet (9) correspond à l'épaisseur du rail porteur (2a, 2b) au niveau du trou traversant (4a, 4b).

12. Agencement selon l'une des revendications précédentes, **caractérisé en ce que** la tête (6a, 6b, 6c, 6d, 6e,) ou le collet (9) du boulon de montage (5a, 5b, 5c, 5d, 5e,) présente une géométrie d'entraînement pour la transmission de couple, dans lequel la géométrie d'entraînement pour la transmission de couple est réalisée sous la forme d'un polygone intérieur, d'un polygone extérieur, d'une étoile intérieure ou d'une étoile extérieure.

13. Agencement selon l'une ou plusieurs des revendications précédentes, **caractérisé en ce que** le ou les boulons de montage (5a, 5b, 5c, 5d, 5e) sont conçus et disposés pour évacuer un courant PE du rail porteur (2a, 2b) et/ou **en ce qu'**ils sont conçus pour influencer la liaison du rail porteur (2a, 2b) à la base de montage (3) de telle sorte que cela soit possible.
